# EUROPEAN PATENT APPLICATION

(11) **EP 4 836 508 A1**
(43) Date of publication of application: **04.11.2026**
(21) Application number: 24916459.1
(22) Date of filing: 24.09.2024
(51) Int. Cl.: H04W 24/10, H04W 28/02

(54) **COMMUNICATION METHOD AND APPARATUS**

(30) Priority: 11.01.2024 CN 202410052076
(71) Applicant: Huawei Technologies Co., Ltd., Shenzhen, Guangdong 518129 (CN)
(72) Inventor: WANG, Wei, Nanjing, Jiangsu 210093 (CN); PANG, Mingzhi, Nanjing, Jiangsu 210093 (CN); NAREN, Gerile, Shenzhen, Guangdong 518129 (CN); DU, Rui, Shenzhen, Guangdong 518129 (CN)
(74) Representative: Körber, Martin Hans
(86) International application number: PCT/CN2024/120891
(87) International publication number: WO 2025/148407

(57) **Abstract**

A communication method and apparatus are provided, and relate to the field of communication technologies, to improve communication performance while reducing device costs for a channel measurement process. The method includes: receiving first information from a measurement initiator, where the first information includes first indication information, and the first indication information indicates a measurement result template; receiving a measurement packet from the measurement initiator, where the measurement packet is determined based on a predicted channel matrix and the measurement result template, and the predicted channel matrix is determined based on a historical channel matrix; performing channel measurement based on the measurement packet to obtain a measurement result; and performing feedback based on a comparison result, where the comparison result is a result of comparison between the measurement result and the measurement result template.

## Description

This application claims priority to Chinese Patent Application No. 202410052076.2, filed with the China National Intellectual Property Administration on January 11, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, a measurement initiator may send a measurement packet to a measurement responder, and the measurement responder may perform channel measurement based on the received measurement packet to obtain a measurement result.

The measurement initiator may further send a report trigger frame to the measurement responder, to trigger the measurement responder to send the measurement result to the measurement initiator. However, in this manner, each measurement responder needs to feed back a measurement result, and the fed-back measurement result has a large data amount, and occupies long channel transmission time, resulting in poor communication performance.

Alternatively, the measurement initiator may further send a threshold-based report trigger frame to the measurement responder, to trigger the measurement responder to send a measurement variation between a current measurement result and a previous measurement result to the measurement initiator. If the measurement variation is greater than or equal to a threshold, the measurement initiator may further send a report trigger frame to the measurement responder, to trigger the measurement responder to send the measurement result to the measurement initiator. However, in this manner, the measurement responder needs to record the previous measurement result, which has a high requirement on software and hardware of the measurement responder, resulting in high device costs.

Therefore, for a channel measurement process, how to improve communication performance while reducing device costs becomes an urgent technical problem to be resolved.

### SUMMARY

This application provides a communication method and apparatus, to improve communication performance while reducing device costs for a channel measurement process.

According to a first aspect, this application provides a communication method. The method may be performed by a measurement responder. Unless otherwise specified, the "measurement responder" in this application may refer to the measurement responder, or may refer to a component (for example, a processor, a chip, or a chip system) in the measurement responder, or may refer to a logical module or software that can implement all or some functions of the measurement responder. The method includes: receiving first information including first indication information from a measurement initiator, where the first indication information indicates a measurement result template; receiving a measurement packet from the measurement initiator; performing channel measurement based on the measurement packet to obtain a measurement result; and performing feedback based on a comparison result, where the comparison result is a result of comparison between the measurement result and the measurement result template. The measurement packet is determined based on a predicted channel matrix and the measurement result template, and the predicted channel matrix is determined based on a historical channel matrix.

According to the first aspect, the measurement initiator may predict a current channel based on the historical channel matrix, and dynamically adjust the measurement packet based on the predicted channel matrix and the measurement result template, so that when the channel changes regularly, the regular change of the channel can be canceled as much as possible by dynamically adjusting the measurement packet. In this way, the measurement result determined by the measurement responder based on the received measurement packet complies with the measurement result template as much as possible. After performing channel measurement based on the received measurement packet, the measurement responder may compare the measurement result with the measurement result template indicated by the measurement initiator, to determine, based on the comparison result, whether to report the measurement result subsequently, so as to maximumly reduce an amount of transmitted data, reduce channel occupation time, reduce interference to another data communication task, and improve communication performance. In addition, the measurement responder does not need to record a historical measurement result or perform complex operations for calculating a measurement result variation. Instead, the historical measurement result (or the historical channel matrix) recording and the complex calculation operation are transferred to the measurement initiator with more resources (for example, the measurement initiator performs a channel matrix prediction operation and perform a dynamic adjustment operation on the measurement packet), to lower a requirement on software and hardware of the measurement responder, and reduce device costs.

In a possible design, the first information further includes second indication information, where the second indication information indicates N subcarriers on which a measurement responder performs channel measurement, and N is a positive integer.

In a possible design, channel measurement is performed on the N subcarriers based on the measurement packet, to obtain N measurement results corresponding to the N subcarriers; the N measurement results are separately compared with the measurement result template, to obtain N first results; and the comparison result is determined based on the N first results.

Based on the foregoing two possible designs, the measurement responder may compare a measurement result on each subcarrier corresponding to the measurement responder with the measurement result template, to provide a feasible solution for calculating the comparison result.

In a possible design, the first information further includes third indication information; the third indication information indicates a type of the comparison result; and the type of the comparison result is any one of the following: an average value of amplitude differences of the N first results, a maximum value of the amplitude differences of the N first results, average values of amplitude deviations and phase deviations of the N first results, and maximum values of the amplitude deviations and the phase deviations of the N first results.

Based on this possible design, because the measurement result is a complex matrix and includes amplitude and phase information, when determining a channel change, the measurement responder may calculate a complex difference between the measured measurement result and the measurement result template, and monitor both an amplitude change and a phase change of the channel based on the third indication information; or calculate only an amplitude difference between the measured measurement result and the measurement result template based on the third indication information, and consider only an amplitude change. This is not limited.

In a possible design, the first information further includes one or more of the following: fourth indication information and fifth indication information. The fourth indication information indicates a measurement mode; the measurement mode is any one of the following: a first measurement mode, a second measurement mode, and a third measurement mode; the first measurement mode indicates the measurement responder to feed back the comparison result; the second measurement mode indicates the measurement responder to feed back the measurement result when the comparison result is greater than or equal to a preset threshold; and the third measurement mode indicates the measurement responder to indicate, by using uplink information, whether the comparison result is greater than or equal to the preset threshold. The fifth indication information indicates the preset threshold.

Based on this possible design, this application provides a plurality of measurement modes, and the measurement responder may perform channel measurement and feedback in one of the measurement modes based on the fourth indication information.

In a possible design, performing feedback based on the comparison result includes: sending the comparison result to the measurement initiator.

Based on this possible design, the measurement responder sends the comparison result to the measurement initiator, so that the measurement initiator can determine, based on the comparison result and the preset threshold, whether the channel prediction is accurate. When the channel prediction is accurate, the measurement initiator may not need to trigger the measurement responder to feed back the measurement result, to reduce the amount of transmitted data, reduce the channel occupation time, reduce interference to another data communication task, and improve communication performance. When the channel prediction is incorrect, the measurement initiator may trigger the measurement responder to feed back the measurement result, to improve channel matrix accuracy. In scenarios in which channels change regularly, a quantity of times of measurement feedback interaction can be effectively suppressed.

In a possible design, performing feedback based on the comparison result includes: when the comparison result is greater than or equal to the preset threshold, sending the measurement result to the measurement initiator; or when the comparison result is less than the preset threshold, skipping feeding back the measurement result.

Based on this possible design, the measurement initiator indicates the measurement result template and the preset threshold to the measurement responder, so that the measurement responder can calculate the result of comparison between the measurement result and the measurement result template and a difference between the comparison result and the preset threshold, thereby reducing message interaction between the measurement initiator and the measurement responder. Channel prediction and precoding operations performed by the measurement initiator are transparent to the measurement responder. The measurement responder only needs to perform simple comparison to determine whether the channel prediction of the measurement initiator is accurate. When the channel prediction is accurate, the measurement responder may not need to feed back the measurement result, to reduce interaction operations in each measurement process, reduce the amount of transmitted data, reduce the channel occupation time, reduce interference to another data communication task, and improve communication performance. When the channel prediction is incorrect, the measurement responder may feed back the measurement result, to improve channel matrix accuracy. In scenarios in which channels change regularly, a quantity of times of measurement feedback interaction can be effectively suppressed.

In a possible design, the first information further includes sixth indication information, the sixth indication information indicates a plurality of consecutive subcarriers used by the measurement responder to send the uplink information, and performing feedback based on the comparison result includes: when the comparison result is less than the preset threshold, sending second information to the measurement initiator based on the plurality of consecutive subcarriers, where the second information indicates that the comparison result is less than the preset threshold; or when the comparison result is greater than or equal to the preset threshold, modulating the plurality of consecutive subcarriers to obtain third information, and sending the third information to the measurement initiator based on the plurality of consecutive subcarriers, where the third information indicates that the comparison result is greater than or equal to the preset threshold.

Based on this possible design, the measurement initiator may indicate a value relationship between the comparison result and the preset threshold by using the uplink information (such as the second information and the third information), and the measurement initiator determines, based on the received uplink information, whether the channel prediction is accurate, to reduce information interaction between the measurement responder and the measurement initiator. When the channel prediction is accurate, the measurement initiator may not need to trigger the measurement responder to feed back the measurement result, to reduce the amount of transmitted data, reduce the channel occupation time, reduce interference to another data communication task, and improve communication performance. When the channel prediction is incorrect, the measurement initiator may trigger the measurement responder to feed back the measurement result, to improve channel matrix accuracy. In scenarios in which channels change regularly, a quantity of times of measurement feedback interaction can be effectively suppressed.

According to a second aspect, this application provides a communication method. The method may be performed by a measurement initiator. Unless otherwise specified, the "measurement initiator" in this application may refer to the measurement initiator, or may refer to a component (for example, a processor, a chip, or a chip system) in the measurement initiator, or may refer to a logical module or software that can implement all or some functions of the measurement initiator. The method includes: sending first information to a measurement responder, and sending a measurement packet to the measurement responder. The first information includes first indication information, and the first indication information indicates a measurement result template. The measurement packet is determined based on a predicted channel matrix and the measurement result template, and the predicted channel matrix is determined based on a historical channel matrix.

According to the second aspect, the measurement initiator may predict a current channel based on the historical channel matrix, and dynamically adjust the measurement packet based on the predicted channel matrix and the measurement result template, so that when the channel changes regularly, the regular change of the channel can be canceled as much as possible by dynamically adjusting the measurement packet. In this way, the measurement result determined by the measurement responder based on the received measurement packet complies with the measurement result template as much as possible. After performing channel measurement based on the received measurement packet, the measurement responder may compare the measurement result with the measurement result template indicated by the measurement initiator, to determine, based on the comparison result, whether to report the measurement result subsequently, so as to maximumly reduce an amount of transmitted data, reduce channel occupation time, reduce interference to another data communication task, and improve communication performance. In addition, the measurement responder does not need to record a historical measurement result or perform complex operations for calculating a measurement result variation. Instead, the historical measurement result (or the historical channel matrix) recording and the complex calculation operation are transferred to the measurement initiator with more resources (for example, the measurement initiator performs a channel matrix prediction operation and perform a dynamic adjustment operation on the measurement packet), to lower a requirement on software and hardware of the measurement responder, and reduce device costs.

In a possible design, the first information further includes second indication information, where the second indication information indicates N subcarriers on which a measurement responder performs channel measurement, and N is a positive integer.

In a possible design, the first information further includes third indication information; the third indication information indicates a type of the comparison result; the type of the comparison result is any one of the following: an average value of amplitude differences of N first results, a maximum value of the amplitude differences of the N first results, average values of amplitude deviations and phase deviations of the N first results, and maximum values of the amplitude deviations and the phase deviations of the N first results; and the N first results are determined based on N measurement results corresponding to the N subcarriers and the measurement result template.

Based on this possible design, because the measurement result is a complex matrix and includes amplitude and phase information, the measurement initiator may indicate, by using the third indication information, the measurement responder to monitor both an amplitude change and a phase change of the channel; or indicate, by using the third indication information, the measurement responder to calculate only an amplitude difference between the measured measurement result and the measurement result template, and consider only an amplitude change. This is not limited.

In a possible design, the first information further includes one or more of the following: fourth indication information and fifth indication information. The fourth indication information indicates a measurement mode; the measurement mode is any one of the following: a first measurement mode, a second measurement mode, and a third measurement mode; the first measurement mode indicates the measurement responder to feed back the comparison result; the second measurement mode indicates the measurement responder to feed back the measurement result when the comparison result is greater than or equal to a preset threshold; and the third measurement mode indicates the measurement responder to indicate, by using uplink information, whether the comparison result is greater than or equal to the preset threshold. The fifth indication information indicates the preset threshold.

Based on this possible design, this application provides a plurality of measurement modes. The measurement initiator may indicate, by using the fourth indication information, the measurement responder to perform channel measurement and feedback in one of the measurement modes.

In a possible design, the method further includes: receiving a comparison result from the measurement responder, where the comparison result is a result of comparison between the measurement result and the measurement result template, and the measurement result is determined based on the measurement packet.

In a possible design, when the comparison result is greater than or equal to the preset threshold, seventh indication information is sent to the measurement responder, where the seventh indication information indicates to report the measurement result; and the measurement result from the measurement responder is received.

In a possible design, an actual channel matrix corresponding to the measurement result is determined based on the measurement result, the measurement result template, and the predicted channel matrix.

In a possible design, when the comparison result is less than the preset threshold, the predicted channel matrix is determined as an actual channel matrix.

Based on the foregoing four possible designs, the measurement responder sends the comparison result to the measurement initiator, so that the measurement initiator can determine, based on the comparison result and the preset threshold, whether the channel prediction is accurate. When the channel prediction is accurate, the measurement initiator may not need to trigger the measurement responder to feed back the measurement result, to reduce the amount of transmitted data, reduce the channel occupation time, reduce interference to another data communication task, and improve communication performance. When the channel prediction is incorrect, the measurement initiator may trigger the measurement responder to feed back the measurement result, to improve channel matrix accuracy. In scenarios in which channels change regularly, a quantity of times of measurement feedback interaction can be effectively suppressed.

In a possible design, the predicted channel matrix is determined as an actual channel matrix when no measurement result from the measurement responder is received within preset time.

Based on this possible design, when the channel prediction is accurate, the measurement responder may not need to feed back the measurement result, to reduce interaction operations in each measurement process, reduce the amount of transmitted data, reduce the channel occupation time, reduce interference to another data communication task, and improve communication performance. When the channel prediction is incorrect, the measurement responder may feed back the measurement result, to improve channel matrix accuracy. In scenarios in which channels change regularly, a quantity of times of measurement feedback interaction can be effectively suppressed.

In a possible design, the first information further includes sixth indication information, and the sixth indication information indicates a plurality of consecutive subcarriers used by the measurement responder to send the uplink information. Second information from the measurement responder is received, where the second information is uplink information, the second information indicates that the comparison result is less than the preset threshold, the comparison result is a result of comparison between a measurement result and the measurement result template, and the measurement result is determined based on the measurement packet. Alternatively, third information from the measurement responder is received, where the third information is modulated uplink information, the third information indicates that the comparison result is greater than or equal to the preset threshold, the comparison result is a result of comparison between the measurement result and the measurement result template, and the measurement result is determined based on the measurement packet.

In a possible design, the predicted channel matrix is determined as an actual channel matrix when the second information from the measurement responder is received.

In a possible design, when the third information from the measurement responder is received, seventh indication information is sent to the measurement responder, where the seventh indication information indicates to report the measurement result; and the measurement result from the measurement responder is received.

In a possible design, an actual channel matrix corresponding to the measurement result is determined based on the measurement result, the measurement result template, and the predicted channel matrix.

Based on the foregoing four designs, the measurement initiator may indicate a value relationship between the comparison result and the preset threshold by using the uplink information (such as the second information and the third information), and the measurement initiator determines, based on the received uplink information, whether the channel prediction is accurate, to reduce information interaction between the measurement responder and the measurement initiator. When the channel prediction is accurate, the measurement initiator may not need to trigger the measurement responder to feed back the measurement result, to reduce the amount of transmitted data, reduce the channel occupation time, reduce interference to another data communication task, and improve communication performance. When the channel prediction is incorrect, the measurement initiator may trigger the measurement responder to feed back the measurement result, to improve channel matrix accuracy. In scenarios in which channels change regularly, a quantity of times of measurement feedback interaction can be effectively suppressed.

According to a third aspect, this application provides a communication apparatus. The communication apparatus may be used in the measurement responder according to the first aspect, to implement a function performed by the measurement responder. The communication apparatus may be the measurement responder, or may be a chip, a chip system, a system on chip, or the like of the measurement responder. The communication apparatus may perform the function performed by the measurement responder through hardware, or the function may be implemented by hardware by executing corresponding software. The hardware or the software includes one or more modules corresponding to the foregoing function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to receive first information including first indication information from a measurement initiator, where the first indication information indicates a measurement result template; the transceiver module is further configured to receive a measurement packet from the measurement initiator; the processing module is configured to perform channel measurement based on the measurement packet to obtain a measurement result; and the transceiver module is further configured to perform feedback based on a comparison result, where the comparison result is a result of comparison between the measurement result and the measurement result template. The measurement packet is determined based on a predicted channel matrix and the measurement result template, and the predicted channel matrix is determined based on a historical channel matrix.

Optionally, the transceiver module and the processing module of the communication apparatus in the third aspect may further perform corresponding functions in any one of the possible designs of the first aspect. For details, refer to the detailed descriptions in the method examples. For beneficial effect that can be achieved, refer to the foregoing related content. Details are not described herein again.

According to a fourth aspect, this application provides a communication apparatus. The communication apparatus may be used in the measurement initiator according to the second aspect, to implement a function performed by the measurement initiator. The communication apparatus may be the measurement initiator, or may be a chip, a chip system, a system on chip, or the like of the measurement initiator. The communication apparatus may perform the function performed by the measurement initiator through hardware, or the function may be implemented by hardware by executing corresponding software. The hardware or the software includes one or more modules corresponding to the foregoing function, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to send first information to a measurement responder, and is further configured to send a measurement packet to the measurement responder. The first information includes first indication information, and the first indication information indicates a measurement result template. The measurement packet is determined based on a predicted channel matrix and the measurement result template, and the predicted channel matrix is determined based on a historical channel matrix.

Optionally, the transceiver module and the processing module of the communication apparatus in the fourth aspect may further perform corresponding functions in any one of the possible designs of the second aspect. For details, refer to the detailed descriptions in the method examples. For beneficial effect that can be achieved, refer to the foregoing related content. Details are not described herein again.

According to a fifth aspect, this application provides a communication apparatus. The communication apparatus includes one or more processors. The one or more processors are configured to run a computer program or instructions. When the one or more processors execute the computer instructions or the instructions, the communication method according to either of the first aspect to the second aspect is performed.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this application, the processor and the memory may alternatively be integrated into one device. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixth aspect, this application provides a communication apparatus. The communication apparatus includes an interface circuit and a logic circuit. The interface circuit is configured to input and/or output information. The logic circuit is configured to perform the communication method according to either of the first aspect and the second aspect, to perform processing based on information and/or generate information.

According to a seventh aspect, this application provides a computer-readable storage medium. The computer-readable storage medium stores computer instructions or a program. When the computer instructions or the program is run on a computer, the communication method according to either of the first aspect and the second aspect is performed.

According to an eighth aspect, this application provides a computer program product including computer instructions. When the computer program product runs on a computer, the communication method according to either of the first aspect and the second aspect is performed.

According to a ninth aspect, this application provides a computer program. When the computer program is run on a computer, the communication method according to either of the first aspect and the second aspect is performed.

According to a tenth aspect, this application provides a chip, including a processor. The processor is coupled to a memory, the memory is configured to store a program or instructions, and when the program or the instructions are executed by the processor, the communication method according to either of the first aspect and the second aspect is performed.

For technical effect brought by any design in the fifth aspect to the tenth aspect, refer to the technical effect brought by either of the first aspect and the second aspect. Details are not described again.

According to an eleventh aspect, this application provides a communication system. The communication system may include the communication apparatus configured to perform the first aspect or any possible design of the first aspect and the communication apparatus configured to perform the second aspect or any possible design of the second aspect.

### BRIEF DESCRIPTION OF DRAWINGS

FIG. 1 is a diagram of a sensing scenario according to an embodiment of this application;
FIG. 2 is a diagram of a measurement method according to an embodiment of this application;
FIG. 3 is a diagram of a measurement method according to an embodiment of this application;
FIG. 4 is a diagram of a communication system according to an embodiment of this application;
FIG. 5 is a diagram of a communication method according to an embodiment of this application;
FIG. 6 is a diagram of a communication method according to an embodiment of this application;
FIG. 7 is a diagram of a communication method according to an embodiment of this application;
FIG. 8A and FIG. 8B are a diagram of a communication method according to an embodiment of this application;
FIG. 9 is a diagram of first information according to an embodiment of this application;
FIG. 10 is a diagram of a communication method according to an embodiment of this application;
FIG. 11 is a diagram of a communication method according to an embodiment of this application;
FIG. 12 is a diagram of a communication method according to an embodiment of this application;
FIG. 13 is a diagram of a communication method according to an embodiment of this application;
FIG. 14 is a diagram of a communication apparatus according to an embodiment of this application;
FIG. 15 is a diagram of a communication apparatus according to an embodiment of this application;
FIG. 16 is a diagram of a structure of a measurement device according to an embodiment of this application; and
FIG. 17 is a diagram of a communication apparatus according to an embodiment of this application.

### DESCRIPTION OF EMBODIMENTS

Before embodiments of this application are described, technical terms used in embodiments of this application are described.

Wireless passive sensing is a technology that uses signals reflected by radio waves on a target object to sense the target object.

With the development of wireless local area network (wireless local area network, WLAN) technologies, a large quantity of devices supporting the wireless local area network technologies have been widely used by people. These devices include a mobile phone, a computer, a wireless router, a smart home device, and the like. In a wireless communication process, a wireless local area network device establishes a communication link between every two devices, and tracks a channel change of the communication link at any time. Because a radio link is very sensitive to interference of surrounding objects, channel state information (channel state information, CSI) of the communication link can be used to sense the objects. Such sensing technologies use radar-like principles for object sensing. One of advantages of using wireless local area network devices for sensing is that a large quantity of low-cost wireless devices can be deployed near users. For example, in a common home environment, more than ten or even hundreds of wireless devices may be deployed around a user.

The channel state information (or referred to as channel information, radio channel information, or the like) refers to a measurement result obtained by performing channel measurement by a measurement responder on a measurement packet sent by a measurement initiator, and is used to reflect a current status of a radio channel. In the wireless fidelity (wireless fidelity, Wi-Fi) protocol, channel state information is measured for each orthogonal frequency division multiplexing (orthogonal frequency division multiplexing, OFDM) subcarrier group, to obtain a CSI matrix corresponding to the subcarrier group. A size of the CSI matrix is a quantity of transmit antennas multiplied by a quantity of receive antennas. Each matrix element is a complex number that contains a real part and an imaginary part.

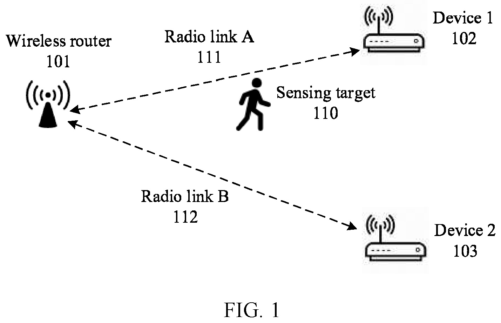

A main task of a wireless passive sensing system based on the wireless passive sensing technology is to sense one or more target objects (for example, a sensing target 110 in FIG. 1) in an environment. A measurement task is generally initiated by a measurement initiator (for example, a wireless router 101 in FIG. 1), and a plurality of measurement responders (for example, a first device 102 and a second device 103 in FIG. 1) in a system make responses. A plurality of measurement links (for example, a radio link A 111 and a radio link B 112 in FIG. 1) may be established between the measurement initiator and the measurement responders, for channel measurement. When a target object moves, specific motion information may be detected based on a change of a radio link. For example, as shown in FIG. 1, a sensing target 110 is closer to the radio link A 111 between the wireless router 101 and the first device 102. Therefore, a motion of the sensing target 110 has great impact on a channel of the radio link A 111, and the sensing target 110 may be sensed based on radio channel information of the radio link A 111. In addition, the radio link B 112 between the wireless router 101 and the second device 103 is far away from the sensing target 110, so the radio link B 112 is slightly affected by the motion of the sensing target, and radio channel information of the radio link B 112 may remain unchanged for a long time or only change slowly.

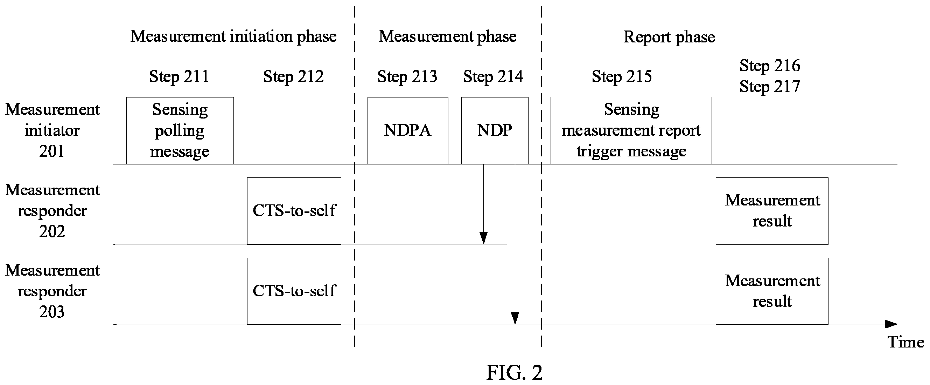

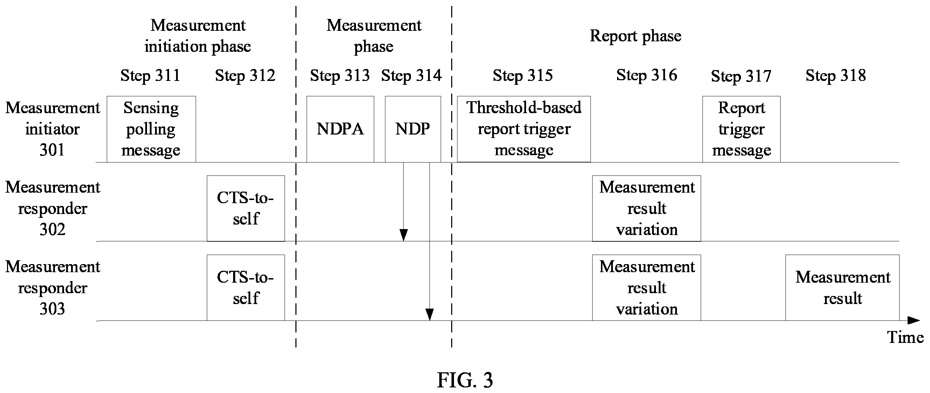

Specifically, the measurement initiator and the measurement responder may perform channel measurement and report a measurement result with reference to a measurement method shown in FIG. 2 or FIG. 3.

In a possible implementation, as shown in FIG. 2, for example, wireless devices include a measurement initiator 201, a measurement responder 202, and a measurement responder 203. In a channel measurement process, the measurement initiator 201 is responsible for coordinating a measurement procedure, and two communication links that are between the measurement initiator 201 and the measurement responder 202 and between the measurement initiator 201 and the measurement responder 203 are measured according to the measurement method shown in FIG. 2. Specifically, the measurement method may include the following steps.

Step 211: In a measurement initiation phase, the measurement initiator 201 sends a sensing polling (sensing polling) message, to notify the measurement responder 202 and the measurement responder 203 to prepare for channel measurement.

Step 212: The measurement responder 202 and the measurement responder 203 simultaneously send a clear to send self (clear to send to self, CTS-to-self) message to make a response, and determine to participate in the measurement procedure.

Step 213: In a measurement phase, the measurement initiator 201 sends a null data packet announcement (null data packet announcement, NDPA) message, to notify the measurement responder 202 and the measurement responder 203 to prepare for receiving a null data packet (null data packet, NDP) and performing channel measurement.

Step 214: The measurement initiator 201 sends the NDP measurement packet, and the measurement responder 202 and the measurement responder 203 simultaneously perform channel measurement on the measurement packet, to obtain a measurement result of the communication link between the measurement initiator 201 and the measurement responder 202 and a measurement result of the communication link between the measurement initiator 201 and the measurement responder 203 respectively.

During channel measurement, the measurement initiator may include a special training symbol in the sent measurement packet. In this way, the measurement responder may perform channel measurement based on a structure of the known training symbol. It may be understood that not all packets include the training symbol.

Step 215: In a report phase, the measurement initiator 201 sends a sensing measurement report trigger message, to notify the measurement responder 202 and the measurement responder 203 to report a sensing measurement result.

Step 216: The measurement responder 202 puts a measurement result into a sensing measurement report (sensing measurement report) message for reporting.

The measurement result is the measurement result of the communication link between the measurement initiator 201 and the measurement responder 202.

Step 217: The measurement responder 203 puts a measurement result into a sensing measurement report message for reporting.

The measurement result is the measurement result of the communication link between the measurement initiator 201 and the measurement responder 203.

In the measurement method in FIG. 2, the measurement initiator needs to actively pull a measurement result in each measurement process, that is, the measurement initiator needs to actively send the sensing measurement report trigger message to the measurement responder, to trigger the measurement responder to report the measurement result. In addition, the measurement initiator needs to periodically obtain the measurement result from each measurement responder. In each channel measurement process, each measurement responder needs to feed back all measurement results. The measurement results include measurement results between a plurality of transmit and receive antennas and on a plurality of subcarriers, and have a large data amount. A data amount of a measurement result of one communication link in a single measurement process may reach tens of KB. Measurement result reporting in step 216 and step 217 occupies long channel transmission time. When the measurement initiator needs to perform channel measurement on a large quantity of communication links (for example, perform hundreds of times of measurement per second to obtain fine-grained motion information), transmission of the measurement results between the measurement responders and the measurement initiator occupies a large quantity of bandwidths, causing interference to another data communication task and affecting communication performance. Even if the measurement results are compressed, the channel is still occupied for a plurality of times when measurement results of a plurality of communication links need to be fed back, which also causes interference to another data communication task and affects communication performance. In addition, in the channel measurement process, if some communication links are stable and measurement results basically remain unchanged, according to the measurement method shown in FIG. 2, the measurement results still need to be fed back in each measurement process, causing redundant data transmission and compute resource consumption.

In another possible implementation, different from the measurement method shown in FIG. 2, whether there is a channel state change may alternatively be determined by using a threshold, and the measurement initiator notifies the measurement responder to feed back all measurement results only when there is a channel state change, to reduce an amount of transmitted data of the measurement results and improve communication performance. Specifically, as shown in FIG. 3, for example, wireless devices include a measurement initiator 301, a measurement responder 302, and a measurement responder 303. In each channel measurement process, the measurement responder 302 and the measurement responder 303 each record a historical measurement result of previous measurement, compare a measurement result of current measurement with the historical measurement result, and perform feedback only when a difference between the current measurement result and the historical measurement result exceeds a threshold. Specifically, the measurement method may include the following steps.

Step 311: In a measurement initiation phase, the measurement initiator 301 sends a sensing polling (sensing polling) message, to notify the measurement responder 302 and the measurement responder 303 to prepare for channel measurement.

Step 312: The measurement responder 302 and the measurement responder 303 simultaneously send a CTS-to-self message to make a response, and determine to participate in the channel measurement procedure.

Step 313: In a measurement phase, the measurement initiator 301 sends an NDPA message, to notify the measurement responder 302 and the measurement responder 303 to prepare for receiving an NDP measurement packet and performing channel measurement.

Step 314: The measurement initiator 301 sends the NDP measurement packet, and the measurement responder 302 and the measurement responder 303 simultaneously perform measurement on the measurement packet, to obtain a measurement result of a communication link between the measurement initiator 301 and the measurement responder 302 and a measurement result of a communication link between the measurement initiator 301 and the measurement responder 303 respectively. The measurement responder 302 and the measurement responder 303 each may further compare the current measurement result with a historical measurement result that is before the current measurement, and calculate a measurement result variation.

Step 315: In a report phase, the measurement initiator 301 sends a threshold-based report trigger message, to notify the measurement responder 302 and the measurement responder 303 to report measurement result variations.

The measurement result variation may be represented by a variation percentage.

Step 316: The measurement responder 302 and the measurement responder 303 put the measurement result variations into measurement reports for reporting.

The measurement report no longer carries a complete measurement result.

Step 317: After receiving the measurement reports carrying the measurement result variations from the measurement responder 302 and the measurement responder 303, the measurement initiator 301 determines, based on the measurement result variations of the measurement responder 302 and the measurement responder 303, whether a further action is required. For example, in the current channel measurement process, the measurement result variation of the measurement responder 302 is small (for example, less than 10%), and the measurement result variation of the measurement responder 303 is large (for example, greater than 30%). In this case, the measurement initiator 301 determines that a channel of the measurement responder 302 does not change and no further reporting is required, but a channel of the measurement responder 303 changes. In this case, the measurement initiator 301 may send a report trigger (report trigger) message, to notify the measurement responder 303 to upload a detailed measurement result in the current channel measurement process.

Step 318: After receiving the report trigger message, the measurement responder 303 puts the detailed measurement result in the current channel measurement process into a sensing measurement report message and transmits the sensing measurement report message to the measurement initiator 301.

In the measurement method shown in FIG. 3, the measurement initiator may initiate a complete measurement result report request only to a measurement responder whose measurement result changes in the channel measurement process, to reduce an amount of transmitted data of the measurement result and improve communication performance. However, the measurement method has a high requirement on software and hardware of the measurement responder. In the measurement method, the measurement responder needs to record a historical measurement result in a previous measurement process, which occupies hardware storage space of the measurement responder. When the measurement responder participates in a plurality of measurement tasks at the same time, the hardware storage space of the measurement responder may be insufficient. In addition, the measurement responder further needs to calculate a measurement result variation after each time of channel measurement, and a calculation requirement on the measurement responder is also high. Because most measurement responders are mobile terminals, their storage and computing capabilities are limited. Therefore, raising too high requirements on the measurement responder increases device costs excessively. In addition, in many wireless environments, channel information changes regularly. For example, when there is an electric appliance like a fan or a washing machine in an environment, such a device causes regular interference to the channel information. In addition, regular human body motions like breathing, also affect the channel to some extent. In this case, there is always a large difference between the channel measurement result and the historical measurement result, and the difference exceeds a measurement report threshold. When the measurement method shown in FIG. 3 is used, each measurement responder needs to perform reporting. However, for such a regular channel change, technologies such as machine learning may be actually used for prediction, and a plurality of times of redundant reporting are not required. Finally, in the measurement method shown in FIG. 3, the measurement result variation further needs to be reported in each measurement process, and complete measurement result reporting is initiated after the measurement result variation exceeds the threshold. This report procedure requires a plurality of times of message interaction, is complex, and has long channel occupation duration, resulting in interference to another data communication task and affecting communication performance.

In conclusion, for a channel measurement process, how to reduce an amount of transmitted data of a measurement result and improve communication performance while reducing device costs becomes an urgent technical problem to be resolved.

To resolve the foregoing technical problem, embodiments of this application provide a communication method. In the method, a measurement initiator may send first information including first indication information to a measurement responder, where the first indication information indicates a measurement result template. The measurement initiator may further send, to the measurement responder, a measurement packet determined based on a predicted channel matrix and the measurement result template, and the measurement responder performs channel measurement based on the measurement packet to obtain a measurement result, and compares the measurement result with the measurement result template to obtain a comparison result. The predicted channel matrix may be determined based on a historical channel matrix.

In embodiments of this application, the measurement initiator may predict a current channel based on the historical channel matrix, and dynamically adjust the measurement packet based on the predicted channel matrix and the measurement result template, so that when the channel changes regularly, the regular change of the channel can be canceled as much as possible by dynamically adjusting the measurement packet. In this way, the measurement result determined by the measurement responder based on the received measurement packet complies with the measurement result template as much as possible. After performing channel measurement based on the received measurement packet, the measurement responder may compare the measurement result with the measurement result template indicated by the measurement initiator, to determine, based on the comparison result, whether to report the measurement result subsequently, so as to maximumly reduce an amount of transmitted data, reduce channel occupation time, reduce interference to another data communication task, and improve communication performance. In addition, the measurement responder does not need to record a historical measurement result or perform complex operations for calculating a measurement result variation. Instead, the historical measurement result (or the historical channel matrix) recording and the complex calculation operation are transferred to the measurement initiator with more resources (for example, the measurement initiator performs a channel matrix prediction operation and perform a dynamic adjustment operation on the measurement packet), to lower a requirement on software and hardware of the measurement responder, and reduce device costs.

The following describes implementations of embodiments of this application in detail with reference to the accompanying drawings in this specification.

The communication method provided in embodiments of this application may be applied to any communication system. The communication system may be a WLAN communication system supporting a related Institute of Electrical and Electronics Engineers (Institute of Electrical and Electronics Engineers, IEEE) standard. The related IEEE standard includes: the 802.11a/b/g standard, the 802.11n standard, the 802.11ac standard, the 802.11ax standard, the 802.11be standard, the 802.11bn standard/ultra high reliability (ultra high reliability, UHR) standard/Wi-Fi 8 standard, the 802.11ad standard, the 802.11ay standard, the 802.11bf standard/sensing (sensing) standard, the ultra wideband (ultra wideband, UWB) standard/802.15 standard, or the like. This is not limited.

Alternatively, the communication system may be a third generation partnership project (third generation partnership project, 3GPP) communication system like a long term evolution (long term evolution, LTE) system, a 5th generation (5th generation, 5G) mobile communication system, an LTE and 5G hybrid networking system, a new radio (new radio, NR) communication system, an NR vehicle to everything (vehicle to everything, V2X) system, or a device-to-device (device-to-device, D2D) communication system, a machine-to-machine (machine-to-machine, M2M) communication system, internet of things (internet of things, IoT), a narrowband internet of things (narrowband-internet of things, NB-IoT) system, various types of next-generation communication systems such as a 5.5G mobile communication system and a 6G communication system, or a non-terrestrial communication network (non-terrestrial network, NTN) system (for example, a satellite communication system). This is not limited.

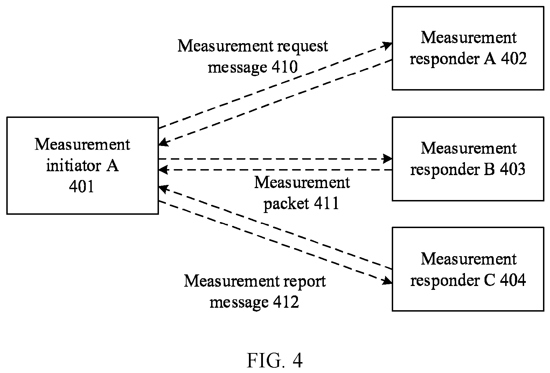

The following uses FIG. 4 as an example to describe the communication system provided in embodiments of this application.

FIG. 4 is a diagram of a communication system according to an embodiment of this application. As shown in FIG. 4, the communication system may include one or more measurement initiators (for example, a measurement initiator A 401 in FIG. 4) and one or more measurement responders (for example, a measurement responder A 402, a measurement responder B 403, and a measurement responder C 404 in FIG. 4).

The measurement initiator is responsible for coordinating and control a channel measurement process, and the measurement initiator may indicate, by using measurement request information (measurement request information 410 in FIG. 4), each measurement responder how to report a measurement result and track channel information. The measurement initiator may further broadcast a measurement packet (for example, a measurement packet 411 in FIG. 4) to all measurement responders, and the measurement responders receive the measurement packet and perform channel measurement on the measurement packet to obtain measurement results. The measurement responder may further feed back detailed information about a measured channel by using a measurement report message (for example, a measurement report message 412 in FIG. 4). The measurement initiator may also be referred to as a sensing initiator (sensing initiator), and the measurement responder may also be referred to as a sensing responder (sensing responder) or a client (client) device. This is not limited.

The measurement initiator acts as a transmit end of the measurement packet, and the measurement responder acts as a receive end of the measurement packet. It may be understood that, on a premise that the basic idea of this application is not violated, roles of the measurement initiator and the measurement responder may be interchanged, and a plurality of receive ends are allowed to simultaneously measure the measurement packet, or the measurement initiator is allowed to perform channel measurement in a manner in which a proxy node serves as a receive end. This is not limited.

In a possible design, for example, the communication system is a WLAN communication system. The measurement initiator and the measurement responder may be wireless network devices, and may specifically include chips and matched system software that support a wireless local area network protocol. The software and hardware in this application may be used in a dedicated network element device, for example, a wireless local area network access point (access point, AP), or may be integrated into various types of user terminal devices, for example, a mobile phone, a personal digital assistant (personal digital assistant, PDA), and the like. In a typical application, the measurement initiator in this application may be deployed on a wireless local area network AP or a smart home control center. The measurement responder may be a mobile device, for example, a mobile phone, or may be a device that integrates a wireless local area network function in a home or office environment, for example, a printer, a smart television, or a smart light bulb.

In another possible design, for example, the communication system is a 3GPP communication system. The measurement initiator may be a network device, and the measurement responder may be a terminal device. The network device may be any device that is deployed in an access network and that can perform wireless communication with a terminal device, or may be a chip or a chip system that may be disposed in the device, or may be a logical node or a logical module or a function implemented as software, and may be configured to implement functions such as a radio physical control function, resource scheduling and radio resource management, radio access control, and mobility management. Specifically, the network device may be a device supporting wired access, or may be a device supporting wireless access. The terminal device may be a device having a wireless transceiver function, or a chip or a chip system that may be disposed in the device, may allow a user to access a network, and is a device configured to provide voice and/or data connectivity for the user. The terminal device may also be referred to as user equipment (user equipment, UE), a subscriber unit (subscriber unit), a terminal (terminal), a mobile station (mobile station, MS), a mobile terminal (mobile terminal, MT), or the like.

For example, the terminal device may be a mobile phone (mobile phone), a tablet computer, or a computer having a wireless transceiver function. Alternatively, the terminal device may be a user station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a PDA, a tablet computer (PAD), a handheld device having a wireless communication function, a computing device, a processing device connected to a wireless modem, a vehicle-mounted device, a wearable device, a terminal device in the internet of things, a home appliance, a virtual reality (virtual reality, VR) terminal, an augmented reality (augmented reality, AR) terminal, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), a vehicle with vehicle-to-vehicle (V2V) communication capability, an intelligent connected vehicle, an uncrewed aerial vehicle having an uncrewed aerial vehicle to uncrewed aerial vehicle (UAV to UAV, U2U) communication capability, a Wi-Fi terminal device (for example, a vehicle-mounted terminal, a smartphone, or a PAD that has a function of connecting to a Wi-Fi access point (access point, AP)), a terminal device in a future network, a terminal device in a future evolved public land mobile network (public land mobile network, PLMN), and the like. This is not limited.

For example, the network device may include one or more access network (access network, AN)/radio access network (radio access network, RAN) nodes. The AN/RAN node may be a base station, a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a Wi-Fi AP. The base station may be a 4G, 5G, 5.5G, or future 6G base station, or the like, and this is not limited. The Wi-Fi AP may be a Wi-Fi 5, Wi-Fi 6, or future Wi-Fi AP product, or the like, and this is not limited.

In another example, the network device may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

In another example, the network device may be a device including a central unit (central unit, CU) node, or including a distributed unit (distributed unit, DU) node, or including a CU node and a DU node. For example, the network device may be divided into a CU and a DU from a perspective of logical functions. Some protocol layer functions are centrally controlled by the CU, remaining or all protocol layer functions are distributed in the DU, and the CU centrally controls the DU. The CU and the DU may be separately disposed, or may be included in a same network element, for example, a BBU. Further, the central unit CU may be further divided into a control plane (CU-CP) and a user plane (CU-UP).

In another example, the network device may alternatively be a radio unit (radio unit, RU) or a device including a CU, a DU, and an RU. The RU may be included in a radio frequency device or a radio frequency unit, for example, included in an RRU, an active antenna unit (active antenna unit, AAU), or a remote radio head (remote radio head, RRH).

It may be understood that in different systems, the CU (or the CU-CP and the CU-UP), the DU, or the RU may alternatively have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. In this application, any unit in the CU (or the CU-CP or the CU-UP), the DU, and the RU may be implemented by using a software module, a hardware module, or a combination of a software module and a hardware module.

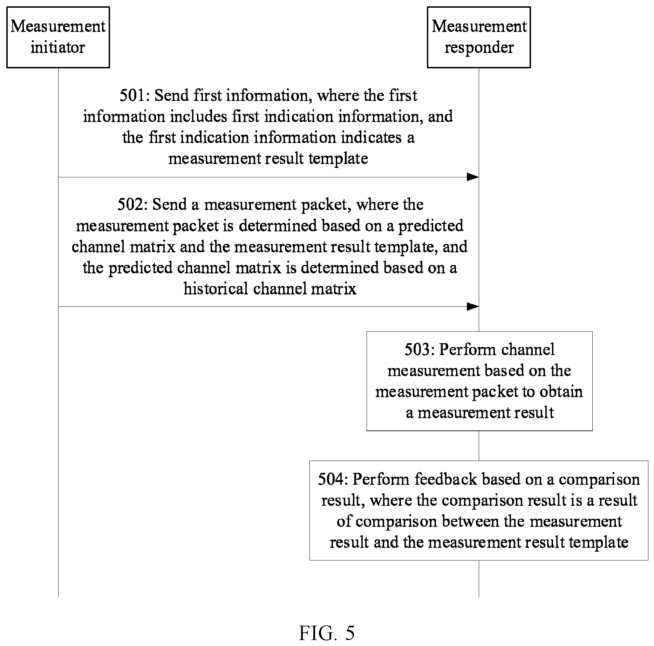

It may be understood that the measurement initiator and the measurement responder in embodiments of this application each may be one or more chips, a system on chip (system on chip, SOC), or the like. FIG. 4 is merely an example accompany drawing, and a quantity of included devices is not limited. Moreover, in addition to the devices shown in FIG. 4, the communication system may further include another device, for example, may further include a wireless relay device and a wireless backhaul device. Names of the devices and the links in FIG. 4 are not limited. In addition to the names shown in FIG. 5, the devices and the links may alternatively have other names. This is not limited.

With reference to the communication system shown in FIG. 4, the following describes in detail the communication method provided in embodiments of this application. A measurement initiator may be any measurement initiator in the communication system shown in FIG. 4, and a measurement responder may be any measurement responder in the communication system shown in FIG. 4.

The measurement initiator predicts a current channel based on a historical channel matrix, and dynamically adjusts a measurement packet based on a predicted channel matrix and a measurement result template, so that when the channel changes regularly, the regular change of the channel can be canceled as much as possible by dynamically adjusting the measurement packet, and a measurement result determined by the measurement responder based on the received measurement packet is controlled to comply with the measurement result template as much as possible. Further, when the measurement responder determines that the measurement result meets the measurement result template, the measurement responder may not need to send the measurement result to the measurement initiator, to reduce an amount of transmitted data. Alternatively, when the measurement responder determines that the measurement result does not meet the measurement result template, the measurement responder may send the measurement result to the measurement initiator, and the measurement initiator determines actual channel information based on the measurement result.

Specifically, in the channel measurement process shown in FIG. 2 or FIG. 3, the measurement packet is generally an NDP measurement packet, and the NDP measurement packet generally includes one or more long training symbols (long training field, LTF). Corresponding to different versions of wireless communication protocols, formats of the LTF may be slightly different. However, a basic format of the LTF is sending a fixed sequence on a plurality of subcarriers in frequency domain. For example, the wireless local area network protocol specifies that a length of a training sequence in a 20 MHz bandwidth x4 mode is N=256, and corresponds to 256 subcarriers, where some points in front and rear parts are set to 0, and a length of a non-zero part is 243 points. An example of a sequence of the non-zero part is as follows: Sₖ={-1, -1, +1, -1, +1, -1, +1, +1, +1, -1, +1, +1, +1, -1, -1, +1, -1, -1, -1, -1, -1, +1, +1, -1, -1, -1, -1, +1, +1, -1, +1, -1, +1, +1, +1, +1, -1, +1, -1, -1, +1, +1, -1, +1, +1, +1, +1, -1, -1, +1, -1, -1, -1, +1, +1, +1, +1, -1, +1, +1, -1, -1, -1, -1, +1, -1, -1, +1, +1, -1, +1, -1, -1, -1, -1, +1, -1, +1, - 1, -1, -1, -1, -1, -1, +1, +1, -1, -1, -1, -1, -1, +1, -1, -1, +1, +1, +1, -1, +1, +1, +1, -1, +1, -1, +1, -1, -1, -1, -1, -1, +1, +1, +1, -1, -1, -1, +1, -1, +1, +1, +1, 0, 0, 0, -1, +1, -1, +1, -1, +1, +1, -1, +1, +1, +1, -1, -1, +1, -1, -1, +1, -1, +1, -1, +1, +1, +1, -1, +1, +1, +1, -1, -1, +1, -1, -1, - 1, -1, -1, +1, +1, -1, -1, -1, -1, -1, -1, +1, -1, +1, -1, -1, -1, -1, +1, -1, +1, +1, -1, -1, +1, -1, -1, -1, -1, +1, +1, -1, +1, +1, +1, +1, +1, +1, +1, -1, +1, +1, -1, -1, -1, -1, +1, -1, -1, +1, +1, - 1, +1, -1, -1, -1, -1, +1, -1, +1, -1, -1, +1, +1, +1, +1, -1, -1, +1, +1, +1, +1, +1, -1, +1, +1, -1, -1, -1, +1, -1, -1, -1, +1, -1, +1, -1, +1, +1}.

When channel measurement needs to be performed on a radio channel, the measurement initiator sends an NDP measurement packet, and the measurement responder receives the NDP measurement packet. If the measurement initiator has *n* antennas, and the measurement responder has *m* antennas, a measurement result obtained on a given subcarrier k in the measurement process is a *m* × *n* channel matrix ***H**ₖ.* For example, when a signal sent by the measurement initiator on the given subcarrier k is a vector *n* with a length of *xₖ,* a signal *yₖ* received by the measurement responder is a vector with a length of *m*: ${y}_{k} = {H}_{k} {x}_{k} + N$ Formula (1)

Herein, *N* is white Gaussian noise. In this case, correspondingly, on the subcarrier k, the measurement responder may perform measurement by using linear-irrelevant *xₖ* received a plurality of times, and calculate the channel matrix ***H**ₖ* by using the known transmitted signal vector *xₖ* and the known received signal vector *yₖ.* To simplify the descriptions, in the following descriptions, it is assumed that the quantities of antennas of the measurement initiator and the measurement responder are both *n*, and measurement sending behaviors in a plurality of times of measurement may be implemented by multiplying a *n* × *n* unit matrix ***I*** by a given subcarrier sending value *Sₖ,* that is, the sent signal is ***X**ₖ = **I**Sₖ.* In this case, the received signal ***Y**ₖ* and the channel matrix ***H**ₖ* are also *n* × *n* matrices. If noise is ignored, it may be learned that a signal ***Y**ₖ* received on the k^{th} subcarrier is: ${Y}_{k} = {H}_{k} I {S}_{k}$ Formula (2)

In this case, it can be learned that the measurement responder may directly calculate the channel matrix ***H**ₖ* by using the following formula: ${H}_{k} = {Y}_{k} / {S}_{k}$

The foregoing manner may also be easily extended to a case in which a non-unit matrix is used for a plurality of times of measurement performed through signal sending and a case in which quantities of transmit antennas and receive antennas are different. Details are not described herein. It may be understood that, when a quantity of receive antennas is greater than a quantity of transmit antennas, that is, *m* > *n*, channels measured on some receive antennas are allowed to be tracked and monitored, that is, channel matrices on a maximum of *n* antennas of the measurement responder are allowed to be monitored. Generally, the measurement initiator is an AP or a network device, and in most cases, a quantity of antennas of the measurement initiator is greater than a quantity of antennas of the measurement responder. Therefore, it is reasonable to perform channel measurement only on a maximum of *n* antennas of the measurement responder. In addition, for channel changes, only a few antennas need to be measured for monitoring. Therefore, in the following descriptions, a case of *m* = *n* is mainly discussed.

When there is no moving object around, the channel matrix ***H*** is basically stable and fluctuates slightly due to noise. When a motion occurs around, the channel matrix changes due to interference from a moving object. Therefore, the measurement responder can sense the motion around based on the measured channel matrix.

In the measurement method shown in FIG. 2, the measurement responder needs to feed back the measurement result to the measurement initiator each time. Because one *m* × *n* complex matrix ***H*** needs to be transferred on each subcarrier, a data amount is very large. In the measurement method shown in FIG. 3, the measurement responder needs to record channel matrices on all subcarriers during previous measurement, and compare the channel matrices with channel matrices in current measurement one by one. When a difference between the current measurement and a historical record exceeds a threshold, it indicates that a channel measured this time changes, and therefore a measurement result needs to be reported. In this method, the measurement responder needs to record a large amount of historical channel matrix data, and calculation complexity is high.

However, in this embodiment of this application, the measurement initiator may control a measurement result measured by the measurement responder, to reduce an amount of transmitted data and calculation complexity. For example, when the signal sent by the measurement initiator is not ***X**ₖ = **I**Sₖ,* but is a signal ${X}_{k} = H {′}_{k}^{- 1} {P}_{k} {S}_{k}$ that is pre-multiplied by a precoding matrix. In this case, a signal received by the measurement responder is: ${Y}_{k} = {H}_{k} H {′}_{k}^{- 1} {P}_{k} {S}_{k} = {P}_{k} {S}_{k}$

Herein, ***Hₖ*** represents a real channel matrix, ***H'ₖ*** represents a predicted channel matrix, and corresponding channel matrix estimation is ${Y}_{k} / {S}_{k} = {H}_{k} H {′}_{k}^{- 1} {P}_{k}$. When the predicted channel matrix ***H'ₖ*** is close to the real channel matrix ***Hₖ***, the corresponding channel matrix estimation changes to ***Y**ₖ*/*Sₖ = **Pₖ**.* It can be learned from the foregoing analysis that, when the measurement initiator can predict the current channel matrix, the measurement initiator may control a measurement result matrix of the measurement responder to make the measurement result matrix close to a predetermined matrix ***Pₖ***, where the predetermined matrix is a measurement result template. Correspondingly, when the channel matrix predicted by the measurement initiator is incorrect, the measurement responder obtains, through measurement, a measurement result that is different from the predetermined matrix ***Pₖ**.* Therefore, the measurement responder only needs to compare whether an actual measurement result is different from the predetermined matrix ***Pₖ*** to determine whether the channel meets prediction of the measurement initiator, and does not need to store a historical record of the channel. In addition, if the channel matrix ***Hₖ*** changes with time, but changes regularly, the measurement initiator may accurately predict a channel matrix at a current moment, dynamically select a precoding matrix based on the predicted channel matrix, to keep a measurement result obtained by the measurement responder through measurement close to the predetermined matrix ***Pₖ***. Under this condition, provided that prediction of the channel matrix keeps relatively accurate, the measurement responder observes an unchanged measurement result. Therefore, the measurement result does not need to be fed back, to reduce the amount of transmitted data.

It may be understood that the foregoing manner of dynamically adjusting the measurement packet is to control the measurement result on the given subcarrier k. In an actual environment, a plurality of different subcarriers may be separately controlled. This is not limited. In addition, the measurement result is a complex matrix, including amplitude and phase information. The measurement initiator may choose to control a complex result of the measurement result. The measurement responder may calculate a complex difference between the measured measurement result and the measurement result template when determining a channel change, and monitor amplitude and phase changes of the channel. Alternatively, when the measurement initiator and the measurement responder at receive and transmit ends of the link cannot be completely synchronized, only an amplitude difference between the measured measurement result and the measurement result template can be calculated, and only an amplitude change is considered.

Based on the foregoing technical principles, as shown in FIG. 5, the communication method provided in embodiments of this application is described in detail.

FIG. 5 is a diagram of a communication method according to an embodiment of this application. As shown in FIG. 5, the method includes the following steps.

Step 501: A measurement initiator sends first information to a measurement responder. Correspondingly, the measurement responder receives the first information from the measurement initiator.

The first information may include first indication information, and the first indication information may indicate a measurement result template.

The measurement result template may be predefined in a communication protocol, and the first indication information may be a template number of the measurement result template.

For example, when a CSI feedback matrix uses integers (-128 to 127) to describe CSI values, 256 measurement result templates may be predefined, for example, a measurement result template 0, a measurement result template 1, ..., a measurement result template 254, and a measurement result template 255. The first indication information may occupy 8 bits to indicate any one of the foregoing 256 measurement result templates.

For example, the template 0 may indicate that a measurement result of each subcarrier needs to be a unit matrix multiplied by a real number 64. To be specific, a measurement result of the measurement responder on each subcarrier corresponding to the measurement responder needs to be a diagonal matrix of 64 on a diagonal. The template 1 may be positive-negative alternating of different subcarriers. To be specific, in one or more subcarriers corresponding to the measurement responder, a measurement result on an odd-numbered subcarrier needs to be obtained by multiplying the unit matrix by the real number 64, and a measurement result on an even-numbered subcarrier needs to be obtained by multiplying the unit matrix by -64.

Optionally, the measurement initiator may select an appropriate measurement result template based on an actual peak to average power ratio (peak to average power ratio, PAPR) requirement, to avoid a special case in which a channel matrix cannot be inverted.

Step 502: The measurement initiator sends a measurement packet to the measurement responder. Correspondingly, the measurement responder receives the measurement packet from the measurement initiator.

The measurement packet is determined based on a predicted channel matrix and the measurement result template, the predicted channel matrix is determined based on a historical channel matrix, and the historical channel matrix is a channel matrix recorded by the measurement initiator in a channel measurement process before the current channel measurement.

Specifically, the measurement initiator may predict a channel matrix at a current moment based on the historical channel matrix to obtain the predicted channel matrix, and dynamically determine a precoding matrix based on the predicted channel matrix and the measurement result template, to effectively track a dynamically changing channel environment, and dynamically determine the measurement packet based on the precoding matrix, that is, the measurement packet sent by the measurement initiator to the measurement responder is a signal that is pre-multiplied by the precoding matrix. In this way, it is expected that the measurement result determined by the measurement responder can be close to the measurement result template on the subcarrier corresponding to the measurement responder.

The measurement initiator may predict the channel matrix at the current moment by using a machine learning algorithm or another prediction algorithm like a convolutional neural network, a transformer, or a conventional linear prediction manner, to obtain the predicted channel matrix. Alternatively, it may be understood that, when the channel is stable, the measurement initiator may alternatively directly use the historical channel matrix as the channel matrix at the current moment. This is not limited.

For example, the predicted channel matrix is ***H'ₖ**,* and the measurement result template is ***Pₖ**.* The precoding matrix may be $H {′}_{k}^{- 1} {P}_{k}$, and the measurement packet determined based on the precoding matrix may be a measurement packet that carries a sent signal ***X**ₖ,* and ${X}_{k} = H {′}_{k}^{- 1} {P}_{k} {S}_{k}$ , where $H {′}_{k}^{- 1}$ is an inverse matrix of ***H'ₖ**,* and *Sₖ* is a reference signal known to the measurement initiator and the measurement responder.

Optionally, a type of the measurement packet may be an NDP measurement packet. The measurement initiator may dynamically change the precoding matrix sent by using an NDP through a machine learning prediction channel, to effectively track the dynamically changing channel environment.

Step 503: The measurement responder performs channel measurement based on the measurement packet to obtain a measurement result.

The measurement responder may perform channel measurement on one or more subcarriers (for example, N subcarriers) corresponding to the measurement responder, to obtain a measurement result corresponding to each subcarrier (for example, N measurement results corresponding to the N subcarriers).

Specifically, the measurement initiator may send second indication information to the measurement responder, where the second indication information indicates the N subcarriers on which the measurement responder performs channel measurement, and N is a positive integer. Optionally, the measurement initiator may carry the second indication information to the first information and send the first information to the measurement responder.

The measurement initiator may indicate different subcarriers to different measurement responders, that is, different measurement responders may perform channel measurement on different subcarriers.

In a first possible implementation, a plurality of subcarrier set templates may be predefined, the N subcarriers indicated by the measurement initiator to the measurement responder may be one of the plurality of subcarrier set templates, and the second indication information may include a template number of the subcarrier set template corresponding to the N subcarriers.

Each subcarrier set template may include one or more subcarriers, and quantities of subcarriers included in different subcarrier set templates may be the same or different. This is not limited.

For example, 256 subcarrier set templates may be predefined, for example, a subcarrier set template 0, a subcarrier set template 1, ..., a subcarrier set template 254, and a subcarrier set template 255, and the second indication information may occupy 8 bits to indicate any one of the 256 subcarrier set templates.

For example, when the template number is 0 (namely, the subcarrier set template 0), it indicates that channel measurement is not required; ...; when the template number is 130 (namely, the subcarrier set template 130), it indicates that channel measurement is performed at an interval of eight subcarriers, and the subcarriers are initially offset by two subcarriers, that is, channel measurement is performed on subcarriers 2, 10, 18, ..., 242, and 250; ...; and when the template number is 255 (namely, the subcarrier set template 255), it indicates that channel measurement is performed on all subcarriers.

In a second possible implementation, different from the foregoing manner of indicating the N subcarriers to the measurement responder based on the subcarrier set template, the measurement initiator may alternatively directly send indexes of the N subcarriers to the measurement responder, that is, the second indication information includes the indexes of the N subcarriers.

In the foregoing two possible implementations, in comparison with the second possible implementation in which the indexes of the N subcarriers are sent, in the first possible implementation, signaling overheads can be reduced by sending the template number of the subcarrier set template. However, the second possible implementation may not be limited to a predefined subcarrier set template, and can improve subcarrier indication flexibility and improve communication performance. In an actual communication scenario, the measurement initiator may flexibly determine which one of the foregoing two possible implementations is used to indicate the N subcarriers. This is not limited.

Step 504: The measurement responder performs feedback based on a comparison result.

The comparison result is a result of comparison between the measurement result and the measurement result template.

The measurement responder may separately compare the N measurement results corresponding to the N subcarriers with the measurement result template, to obtain N first results, and determine the comparison result based on the N first results.

The measurement initiator may further send third indication information to the measurement responder, where the third indication information indicates a type of the comparison result. The measurement responder determines the comparison result based on the type of the comparison result and the N first results.

For example, the type of the comparison result may be any one of the following: an average value of amplitude differences of the N first results, a maximum value of the amplitude differences of the N first results, average values of amplitude deviations and phase deviations of the N first results, and maximum values of the amplitude deviations and the phase deviations of the N first results.

For example, the type of the comparison result is the average value (or the maximum value) of the amplitude differences of the N first results. Amplitudes of the N measurement results may be separately compared with an amplitude of the measurement result template to obtain the amplitude differences of the N first results, and the average value (or the maximum value) of the amplitude differences of the N first results is determined as the comparison result.

The amplitude difference may be an absolute value of a difference between the amplitude of the measurement result and the amplitude of the measurement result template, or may be a percentage difference between the absolute value and the measurement result template.

For another example, the type of the comparison result is the average value (or the maximum value) of the amplitude deviations and the phase deviations of the N first results. Amplitudes and phases of the N measurement results may be separately compared with an amplitude and a phase of the measurement result template, to obtain the amplitude deviations and the phase deviations of the N first results, and the average values (or the maximum values) of the amplitude deviations and the phase deviations of the N first results are determined as the comparison result.

The amplitude deviation and the phase deviation may be absolute values of differences between the amplitude and the phase of the measurement result and the amplitude and the phase of the measurement result, or may be percentage differences between the absolute values and the measurement result template.

Optionally, the third indication information may occupy 2 bits to indicate any one of the foregoing four types of comparison results.

For example, a value of the third indication information being 00 indicates the average value of the amplitude differences of the N first results; a value of the third indication information being 01 indicates the maximum value of the amplitude differences of the N first results; a value of the third indication information being 10 indicates the average values of the amplitude deviations and the phase deviations of the N first results; or a value of the third indication information being 11 indicates the maximum values of the amplitude deviations and the phase deviations of the N first results.

Optionally, the measurement initiator may carry the third indication information to the first information and send the first information to the measurement responder.

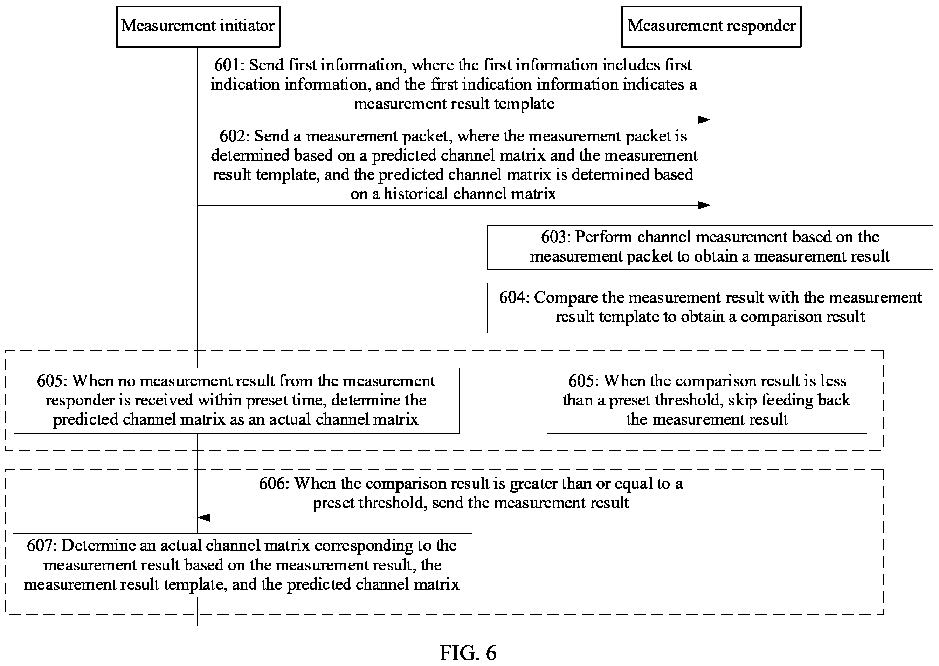

Specifically, when the measurement responder performs feedback based on the comparison result, the measurement responder may perform feedback to the measurement initiator with reference to the method shown in FIG. 6, FIG. 7, or FIG. 8A and FIG. 8B. Details are not described herein.

Based on the method shown in FIG. 5, a predictive tracking measurement manner is provided to perform channel measurement. To be specific, the measurement initiator may use various types of machine learning algorithms and the like to predict the current channel based on the historical channel matrix, and dynamically adjust the measurement packet based on the predicted channel matrix and the measurement result template, so that when the channel changes regularly, the regular change of the channel can be canceled as much as possible by dynamically adjusting the measurement packet. In this way, the measurement result determined by the measurement responder based on the received measurement packet complies with the measurement result template as much as possible. After performing channel measurement based on the received measurement packet, the measurement responder may compare the measurement result with the measurement result template indicated by the measurement initiator, to determine, based on the comparison result, whether to report the measurement result subsequently, so as to maximumly reduce an amount of transmitted data, reduce channel occupation time, reduce interference to another data communication task, and improve communication performance.

In addition, channel prediction and precoding operations performed by the measurement initiator are transparent to the measurement responder. The measurement responder only needs to perform simple template comparison to determine whether the measurement result meets the expectation, and does not need to record a historical measurement result or perform complex operations for calculating a measurement result variation. Instead, the historical measurement result (or the historical channel matrix) recording and the complex calculation operation are transferred to the measurement initiator with more resources (for example, the measurement initiator performs a channel matrix prediction operation and perform a dynamic adjustment operation on the measurement packet), to reduce a storage cost and a calculation cost of the measurement responder, lower a requirement on software and hardware of the measurement responder, and reduce device costs.

Based on the method shown in FIG. 5, the measurement responder may perform feedback to the measurement initiator with reference to the method shown in FIG. 6, FIG. 7, or FIG. 8A and FIG. 8B.

FIG. 6 is a diagram of a communication method according to an embodiment of this application. As shown in FIG. 6, the method includes the following steps.

Step 601: A measurement initiator sends first information to a measurement responder. Correspondingly, the measurement responder receives the first information from the measurement initiator.

Step 602: The measurement initiator sends a measurement packet to the measurement responder. Correspondingly, the measurement responder receives the measurement packet from the measurement initiator.

Step 603: The measurement responder performs channel measurement based on the measurement packet to obtain a measurement result.

Step 604: The measurement responder compares the measurement result with a measurement result template to obtain a comparison result.

For descriptions of step 601 to step 604, refer to the specific descriptions of step 501 to step 504. Details are not described herein again.

Step 605: When the comparison result is less than a preset threshold, the measurement responder does not feed back the measurement result. Correspondingly, the measurement initiator determines a predicted channel matrix as an actual channel matrix when no measurement result from the measurement responder is received within preset time.

The measurement initiator may send fifth indication information to the measurement responder, where the fifth indication information indicates the preset threshold. The preset time may be predefined in a communication protocol, or may be indicated by the measurement initiator to the measurement responder. This is not limited.

For example, when the comparison result is an absolute value, the preset threshold may correspondingly be a specific value. Alternatively, when the comparison result is a percentage, the preset threshold may correspondingly be a percentage threshold, for example, 10% or 20%. This is not limited.

Optionally, the measurement initiator may carry the fifth indication information to the first information and send the first information to the measurement responder.

When the comparison result is less than the preset threshold, it indicates that the difference between the measurement result and the measurement result template is small, and the actual channel matrix meets the prediction of the measurement initiator. In this case, the measurement responder may not feed back the measurement result to the measurement initiator, and the measurement initiator may determine the predicted channel matrix as the actual channel matrix. In this way, an amount of transmitted data can be reduced, channel occupation time can be reduced, interference to another data communication task can be reduced, and communication performance can be improved.

Different from step 605 in which the measurement initiator determines the predicted channel matrix as the actual channel matrix when the comparison result is less than the preset threshold, when the comparison result is greater than or equal to the preset threshold, the measurement initiator may determine the actual channel matrix based on the following step 606 and step 607.

Step 606: When the comparison result is greater than or equal to the preset threshold, the measurement responder sends the measurement result to the measurement initiator. Correspondingly, the measurement initiator receives the measurement result from the measurement responder.

Step 607: The measurement initiator determines the actual channel matrix corresponding to the measurement result based on the measurement result, the measurement result template, and the predicted channel matrix.

When the comparison result is greater than or equal to the preset threshold, it indicates that the difference between the measurement result and the measurement result template is large, and the actual channel matrix does not meet the prediction of the measurement initiator. In this case, the measurement responder may feed back the measurement result to the measurement initiator. When receiving the measurement result fed back by the measurement responder, the measurement initiator may determine that a difference between the predicted channel matrix and the actual channel matrix is large, and further determine the actual channel matrix based on the received measurement result, thereby improving channel matrix accuracy.

For example, the predicted channel matrix is ***H'ₖ**,* the measurement result template is ***Pₖ**,* the measurement result is ***P'ₖ*,** and the actual channel matrix is ***Hₖ**.* A signal sent by the measurement initiator is ${X}_{k} = H {′}_{k}^{- 1} {P}_{k} {S}_{k}$, a signal received by the measurement responder is ${Y}_{k} = {H}_{k} H {′}_{k}^{- 1} {P}_{k} {S}_{k}$, and a measurement result $P {′}_{k} = {Y}_{k} / {S}_{k} = {H}_{k} H {′}_{k}^{- 1} {P}_{k}$ is determined by the measurement responder based on the received signal. The measurement initiator may determine the actual channel matrix ${H}_{k} = P {′}_{k} / \left(H{′}_{k}^{- 1}{P}_{k}\right)$ based on the measurement result ***P'ₖ*** fed back by the measurement responder, the predicted channel matrix ***H'ₖ**,* and the measurement result template ***Pₖ**.*

Optionally, the measurement initiator may further record the actual channel matrix determined based on step 605 or step 607 as a historical channel matrix, to predict a channel matrix at a next moment.

Optionally, the measurement initiator may further adjust a channel prediction algorithm based on the determined actual channel matrix when the channel matrix prediction is incorrect, thereby improving prediction accuracy of the channel matrix. Various applications of the machine learning algorithm in channel measurement are extended through simple message interaction.

In the method shown in FIG. 6, that the measurement responder sends the measurement result to the measurement initiator when the comparison result is equal to the preset threshold may be understood as that the measurement responder may not feed back the measurement result when the comparison result is equal to the preset threshold. In other words, step 605 and step 606 may be replaced with as follows: When the comparison result is less than or equal to the preset threshold, the measurement responder does not feed back the measurement result; and when the comparison result is greater than the preset threshold, the measurement responder sends the measurement result to the measurement initiator.

Based on the method shown in FIG. 6, the measurement initiator indicates the measurement result template and the preset threshold to the measurement responder, so that the measurement responder can calculate the result of comparison between the measurement result and the measurement result template and a difference between the comparison result and the preset threshold, thereby reducing message interaction between the measurement initiator and the measurement responder. Channel prediction and precoding operations performed by the measurement initiator are transparent to the measurement responder. The measurement responder only needs to perform simple comparison to determine whether the channel prediction of the measurement initiator is accurate. When the channel prediction is accurate, the measurement responder may not need to feed back the measurement result, to reduce interaction operations in each measurement process, reduce the amount of transmitted data, reduce the channel occupation time, reduce interference to another data communication task, and improve communication performance. When the channel prediction is incorrect, the measurement responder may feed back the measurement result, to improve channel matrix accuracy. In scenarios in which channels change regularly, a quantity of times of measurement feedback interaction can be effectively suppressed.

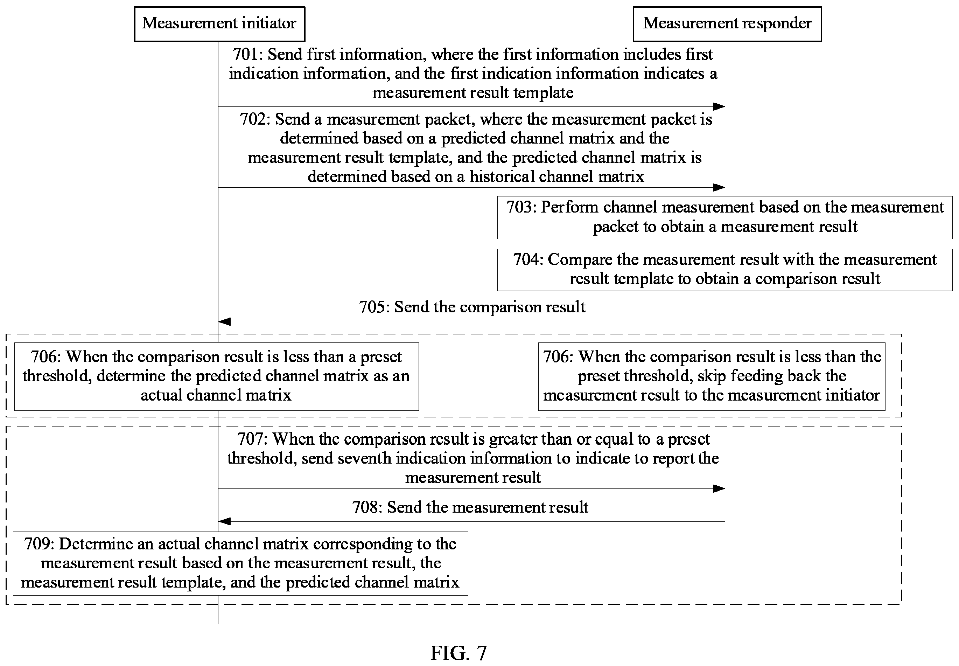

Different from the method shown in FIG. 6 in which the measurement responder determines, based on the comparison result and the preset threshold, whether to send the measurement result to the measurement initiator, as shown in the method shown in FIG. 7, the measurement responder may alternatively feed back the comparison result to the measurement initiator, and the measurement initiator determines, based on the comparison result and the preset threshold, whether to trigger the measurement responder to feed back the measurement result.

FIG. 7 is a diagram of a communication method according to an embodiment of this application. As shown in FIG. 7, the method includes the following steps.

Step 701: A measurement initiator sends first information to a measurement responder. Correspondingly, the measurement responder receives the first information from the measurement initiator.

Step 702: The measurement initiator sends a measurement packet to the measurement responder. Correspondingly, the measurement responder receives the measurement packet from the measurement initiator.

Step 703: The measurement responder performs channel measurement based on the measurement packet to obtain a measurement result.

Step 704: The measurement responder compares the measurement result with a measurement result template to obtain a comparison result.

For descriptions of step 701 to step 704, refer to the specific descriptions of step 501 to step 504. Details are not described herein again.

Step 705: The measurement responder sends the comparison result to the measurement initiator. Correspondingly, the measurement initiator receives the comparison result from the measurement responder.

Step 706: When the comparison result is less than a preset threshold, the measurement initiator determines a predicted channel matrix as an actual channel matrix. Correspondingly, the measurement responder does not need to send the measurement result to the measurement initiator.

For descriptions of the preset threshold, refer to the related descriptions in FIG. 6. Details are not described again.

When the comparison result is less than the preset threshold, it indicates that a difference between the measurement result and the measurement result template is small, and the actual channel matrix meets the prediction of the measurement initiator. In this case, the measurement initiator may directly determine the predicted channel matrix as the actual channel matrix, and the measurement responder does not need to feed back the measurement result, to reduce an amount of transmitted data, reduce channel occupation time, reduce interference to another data communication task, and improve communication performance.

Different from step 706 in which the measurement initiator determines the predicted channel matrix as the actual channel matrix when the comparison result is less than the preset threshold, when the comparison result is greater than or equal to the preset threshold, the measurement initiator may determine the actual channel matrix based on the following step 707 to step 709.

Step 707: When the comparison result is greater than or equal to a preset threshold, the measurement initiator sends seventh indication information to the measurement responder. Correspondingly, the measurement responder receives the seventh indication information from the measurement initiator.

The seventh indication information indicates to report the measurement result.

When the comparison result is greater than or equal to the preset threshold, it indicates that a difference between the measurement result and the measurement result template is large, and the actual channel matrix does not meet the prediction of the measurement initiator. In this case, the measurement initiator may trigger, by using the seventh indication information, the measurement responder to feed back the measurement result, to determine the actual channel matrix based on the received measurement result, thereby improving channel matrix accuracy.

Step 708: The measurement responder sends the measurement result to the measurement initiator based on the seventh indication information. Correspondingly, the measurement initiator receives the measurement result from the measurement responder.

Step 709: The measurement initiator determines the actual channel matrix corresponding to the measurement result based on the measurement result, the measurement result template, and the predicted channel matrix.

For descriptions of step 709, refer to the related descriptions of step 607. Details are not described again.

Optionally, the measurement initiator may further record the actual channel matrix determined based on step 706 or step 709 as a historical channel matrix, to predict a channel matrix at a next moment.

Optionally, the measurement initiator may further adjust a channel prediction algorithm based on the determined actual channel matrix when the channel matrix prediction is incorrect, thereby improving prediction accuracy of the channel matrix. Various applications of the machine learning algorithm in channel measurement are extended through simple message interaction.

In the method shown in FIG. 7, that the measurement initiator triggers, by using the seventh indication information, the measurement responder to feed back the measurement result when the comparison result is equal to the preset threshold may be understood as that the measurement initiator may not trigger the measurement responder to feed back the measurement result when the comparison result is equal to the preset threshold. In other words, step 706 and step 707 may be replaced with as follows: When the comparison result is less than or equal to the preset threshold, the measurement initiator determines the predicted channel matrix as the actual channel matrix, and correspondingly, the measurement responder does not need to send the measurement result to the measurement initiator; and when the comparison result is greater than the preset threshold, the measurement initiator sends the seventh indication information to the measurement responder, to trigger the measurement responder to feed back the measurement result.

Based on the method shown in FIG. 7, the measurement initiator indicates the measurement result template to the measurement responder, so that the measurement responder can calculate the difference between the measurement result and the measurement result template. Channel prediction and precoding operations performed by the measurement initiator are transparent to the measurement responder. The measurement responder only needs to perform simple template comparison. The measurement responder sends the comparison result to the measurement initiator, so that the measurement initiator can determine, based on the comparison result and the preset threshold, whether the channel prediction is accurate. When the channel prediction is accurate, the measurement initiator may not need to trigger the measurement responder to feed back the measurement result, to reduce the amount of transmitted data, reduce the channel occupation time, reduce interference to another data communication task, and improve communication performance. When the channel prediction is incorrect, the measurement initiator may trigger the measurement responder to feed back the measurement result, to improve channel matrix accuracy. In scenarios in which channels change regularly, a quantity of times of measurement feedback interaction can be effectively suppressed.

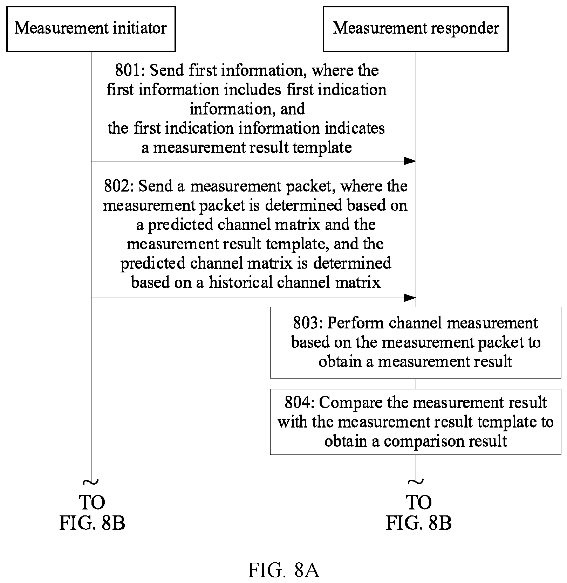

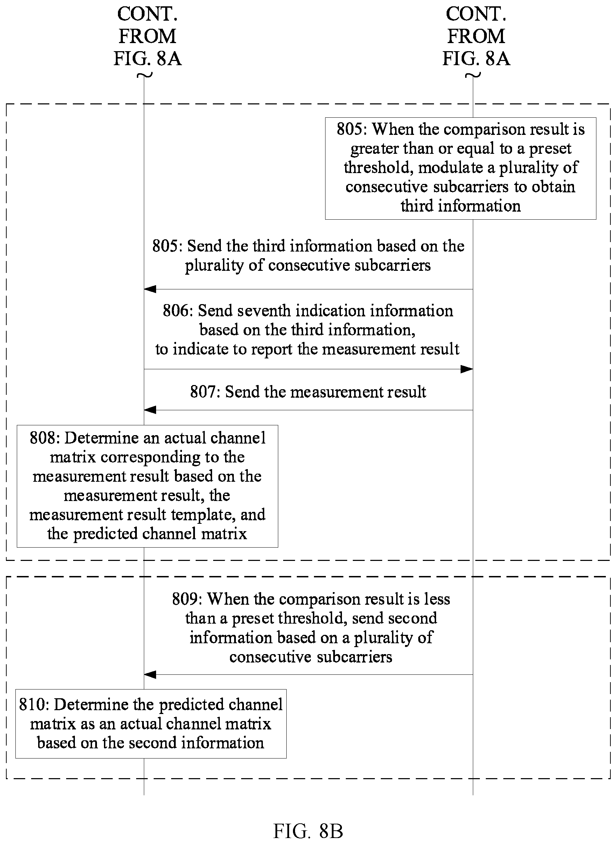

Different from the method in FIG. 7 in which the measurement initiator determines, based on the comparison result and the preset threshold, whether to trigger the measurement responder to feed back the measurement result, as shown in the method shown in FIG. 8A and FIG. 8B, the measurement initiator may alternatively determine, based on uplink information sent by the measurement responder, whether to trigger the measurement responder to feed back the measurement result.

FIG. 8A and FIG. 8B are a diagram of a communication method according to an embodiment of this application. As shown in FIG. 8A and FIG. 8B, the method includes the following steps.

Step 801: A measurement initiator sends first information to a measurement responder. Correspondingly, the measurement responder receives the first information from the measurement initiator.

Step 802: The measurement initiator sends a measurement packet to the measurement responder. Correspondingly, the measurement responder receives the measurement packet from the measurement initiator.

Step 803: The measurement responder performs channel measurement based on the measurement packet to obtain a measurement result.

Step 804: The measurement responder compares the measurement result with a measurement result template to obtain a comparison result.

For descriptions of step 801 to step 804, refer to the specific descriptions of step 501 to step 504. Details are not described herein again.

Step 805: When the comparison result is greater than or equal to a preset threshold, the measurement responder modulates a plurality of consecutive subcarriers to obtain third information, and sends the third information to the measurement initiator based on the plurality of consecutive subcarriers. Correspondingly, the measurement initiator receives the third information from the measurement responder.

The third information indicates that the comparison result is greater than or equal to the preset threshold. For descriptions of the preset threshold, refer to the related descriptions in FIG. 6. Details are not described herein again.

The measurement initiator may send sixth indication information to the measurement responder, where the sixth indication information indicates a plurality of consecutive subcarriers used by the measurement responder to send the uplink information. Optionally, the measurement initiator may carry the sixth indication information to the first information and send the first information to the measurement responder.

In the channel measurement process, in addition to a downlink measurement packet sent by the measurement initiator, the uplink information sent by the measurement responder to the measurement initiator may also exist in single measurement. The uplink information may be used to feed back a value relationship between the comparison result and the preset threshold to the measurement initiator, so that the measurement initiator may determine, based on the uplink information, whether to trigger the measurement responder to feed back the measurement result. Optionally, the uplink information may be an uplink NDP packet, and the uplink information may also be used to measure an uplink, or may be used to measure a link between two measurement responders. This is not limited.

When the uplink information is used to feed back the value relationship between the comparison result and the preset threshold to the measurement initiator, a similarity of a channel measurement result matrix between adjacent subcarriers may be used. To be specific, because radio channel responses have a similarity under a given coherence bandwidth, a channel difference between adjacent subcarriers is not too large. In this case, when sending the uplink information, the measurement responder may modulate (for example, perform phase modulation on) a given subcarrier to send specific information (for example, the third information).

For example, the plurality of consecutive subcarriers indicated by the measurement initiator to the measurement responder by using the sixth indication information are a subcarrier 0 to a subcarrier 5. When the comparison result is greater than or equal to the preset threshold, the measurement responder may modulate the subcarrier 0 to the subcarrier 5, for example, may multiply the subcarrier 0 to the subcarrier 5 by -1, 1, 1, -1, -1, and -1 respectively to obtain the third information, and send the third information to the measurement initiator by using the modulated subcarriers.

Optionally, in a manner of sending specific information through uplink NDP modulation (or downlink NDP modulation), operations such as packet power control (for example, a STA indicates an AP to adjust a sending power in this manner) and node sleep notification (for example, the STA indicates the AP to enter a sleep state in this manner) may also be performed in the channel measurement process. This is not limited.

Step 806: The measurement initiator sends seventh indication information to the measurement responder based on the third information. Correspondingly, the measurement responder receives the seventh indication information from the measurement initiator.

The seventh indication information indicates to report the measurement result.

The measurement initiator may determine, based on the received third information, that the comparison result is greater than or equal to the preset threshold, that is, may determine that a difference between the measurement result and the measurement result template is large, and an actual channel matrix does not meet the prediction of the measurement initiator. In this case, the measurement initiator may trigger, by using the seventh indication information, the measurement responder to feed back the measurement result, to determine the actual channel matrix based on the received measurement result, thereby improving channel matrix accuracy.

Step 807: The measurement responder sends the measurement result to the measurement initiator. Correspondingly, the measurement initiator receives the measurement result from the measurement responder.

Step 808: The measurement initiator determines the actual channel matrix corresponding to the measurement result based on the measurement result, the measurement result template, and a predicted channel matrix.

For descriptions of step 808, refer to the related descriptions of step 607. Details are not described again.

Different from step 805 to step 808 in which the measurement initiator determines the actual channel matrix based on the measurement result when receiving the third information, when the measurement initiator receives second information in the following step 809, the measurement initiator may determine the actual channel matrix based on the following step 810.

Step 809: When the comparison result is less than the preset threshold, the measurement responder sends second information to the measurement initiator based on a plurality of consecutive subcarriers. Correspondingly, the measurement initiator receives the second information from the measurement responder.

The second information indicates that the comparison result is less than the preset threshold. For descriptions of the preset threshold, refer to the related descriptions in FIG. 6. Details are not described herein again. For the plurality of consecutive subcarriers, refer to the related descriptions in step 805. Details are not described again.

When the comparison result is less than the preset threshold, the measurement responder may not need to modulate the plurality of consecutive subcarriers, that is, the second information is uplink information that is not modulated.

Step 810: The measurement initiator determines the predicted channel matrix as the actual channel matrix based on the second information.

The measurement initiator may determine, based on the received second information, that the comparison result is less than the preset threshold, that is, may determine that the difference between the measurement result and the measurement result template is small, and the actual channel matrix meets the prediction of the measurement initiator. In this case, the measurement initiator may not need to trigger the measurement responder to feed back the measurement result, and the measurement initiator may determine the predicted channel matrix as the actual channel matrix. In this way, an amount of transmitted data can be reduced, channel occupation time can be reduced, interference to another data communication task can be reduced, and communication performance can be improved.

Optionally, the measurement initiator may further record the actual channel matrix determined based on step 808 or step 810 as a historical channel matrix, to predict a channel matrix at a next moment.

Optionally, the measurement initiator may further adjust a channel prediction algorithm based on the determined actual channel matrix when the channel matrix prediction is incorrect, thereby improving prediction accuracy of the channel matrix. Various applications of the machine learning algorithm in channel measurement are extended through simple message interaction.

In the method shown in FIG. 8A and FIG. 8B, that the measurement responder sends the third information to the measurement initiator when the comparison result is equal to the preset threshold may be understood as that when the comparison result is equal to the preset threshold, the measurement responder may alternatively send the second information to the measurement initiator. In other words, step 805 and step 809 may be replaced with as follows: When the comparison result is greater than the preset threshold, the measurement responder modulates the plurality of consecutive subcarriers to obtain the third information, and sends the third information to the measurement initiator based on the plurality of consecutive subcarriers; and when the comparison result is less than or equal to the preset threshold, the measurement responder sends the second information to the measurement initiator based on the plurality of consecutive subcarriers.

Based on the method shown in FIG. 8A and FIG. 8B, the measurement initiator indicates the measurement result template and the preset threshold to the measurement responder, so that the measurement responder can calculate the result of comparison between the measurement result and the measurement result template and a difference between the comparison result and the preset threshold, thereby reducing message interaction between the measurement initiator and the measurement responder. Channel prediction and precoding operations performed by the measurement initiator are transparent to the measurement responder. The measurement responder only needs to perform simple comparison to determine whether the channel prediction of the measurement initiator is accurate. Further, the uplink information indicates the value relationship between the comparison result and the preset threshold, and the measurement initiator determines, based on the received uplink information, whether the channel prediction is accurate, to reduce information interaction between the measurement responder and the measurement initiator. When the channel prediction is accurate, the measurement initiator may not need to trigger the measurement responder to feed back the measurement result, to reduce the amount of transmitted data, reduce the channel occupation time, reduce interference to another data communication task, and improve communication performance. When the channel prediction is incorrect, the measurement initiator may trigger the measurement responder to feed back the measurement result, to improve channel matrix accuracy. In scenarios in which channels change regularly, a quantity of times of measurement feedback interaction can be effectively suppressed.

Based on the methods shown in FIG. 6 to FIG. 8B, optionally, the measurement initiator may further send fourth indication information to the measurement responder, where the fourth indication information indicates a measurement mode, and the measurement responder performs channel measurement and reporting based on the measurement mode indicated by the fourth indication information.

The measurement mode may be any one of the following: a first measurement mode, a second measurement mode, and a third measurement mode.

The first measurement mode indicates the measurement responder to feed back the comparison result. The second measurement mode indicates the measurement responder to feed back the measurement result when the comparison result is greater than or equal to the preset threshold. Alternatively, it may be described as that the second measurement mode indicates the measurement responder not to feed back the measurement result when the comparison result is less than the preset threshold. The third measurement mode indicates the measurement responder to indicate, by using the uplink information, whether the comparison result is greater than or equal to the preset threshold. Alternatively, it is described as that the third measurement mode indicates the measurement responder to indicate, by using the uplink information, whether the comparison result is less than the preset threshold, or it is described as that the third measurement mode indicates the measurement responder to indicate the value relationship between the comparison result and the preset threshold by using the uplink information.

When the fourth indication information indicates the first measurement mode, the measurement initiator and the measurement responder may perform channel measurement and reporting with reference to the method shown in FIG. 7. When the fourth indication information indicates the second measurement mode, the measurement initiator and the measurement responder may perform channel measurement and reporting with reference to the method shown in FIG. 6. When the fourth indication information indicates the third measurement mode, the measurement initiator and the measurement responder may perform channel measurement and reporting with reference to the method shown in FIG. 8A and FIG. 8B.

It may be understood that when the fourth indication information indicates the second measurement mode or the third measurement mode, the measurement initiator needs to indicate the preset threshold to the measurement responder by using the fifth indication information. When the fourth indication information indicates the first measurement mode, the measurement initiator may indicate the preset threshold to the measurement responder by using the fifth indication information, or may not send the fifth indication information to the measurement responder. This is not limited.

It may be understood that the measurement initiator may alternatively indicate, by using the fourth indication information, the measurement mode shown in FIG. 2 or FIG. 3, so that the measurement initiator and the measurement responder perform channel measurement and reporting with reference to the method shown in FIG. 2 or FIG. 3. This is not limited.

Optionally, the measurement initiator may carry the fourth indication information to the first information and send the first information to the measurement responder.

Optionally, the measurement initiator may send the first information to the measurement responder in the measurement task establishment process. For example, the measurement initiator may send a sensing measurement request (Sensing Measurement Request) message carrying the first information to the measurement responder.

The sensing measurement request message is used to request the measurement responder to participate in the current measurement task. The sensing measurement request message may include information such as a physical channel parameter used for measurement and a measurement frequency, and may further include dynamic monitoring measurement parameter configuration information, namely, the first information.

Optionally, a sensing measurement parameter (Sensing Measurement Parameter) field in the sensing measurement request message may be extended, and the first information is located in the extended field.

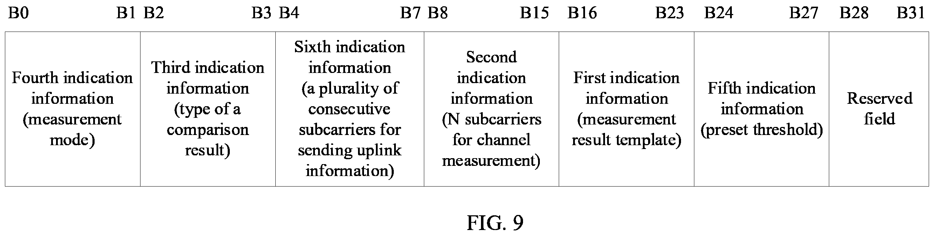

For example, as shown in FIG. 9, a sensing subelement (Sensing Subelement) with a length of four bytes (Bytes) may indicate the first information. The first information may include one or more of the following: 2-bit fourth indication information, 2-bit third indication information, 4-bit sixth indication information, 8-bit second indication information, 8-bit first indication information, 4-bit fifth indication information, and a 4-bit reserved field.

The first indication information indicates the measurement result template. The second indication information indicates the N subcarriers on which the measurement responder to perform channel measurement. The third indication information indicates the type of the comparison result. The fourth indication information indicates the measurement mode. The fifth indication information indicates the preset threshold. The sixth indication information indicates the plurality of consecutive subcarriers used by the measurement responder to send the uplink information. For detailed descriptions of each piece of indication information, refer to the related descriptions in FIG. 5 to FIG. 8B. Details are not described again.

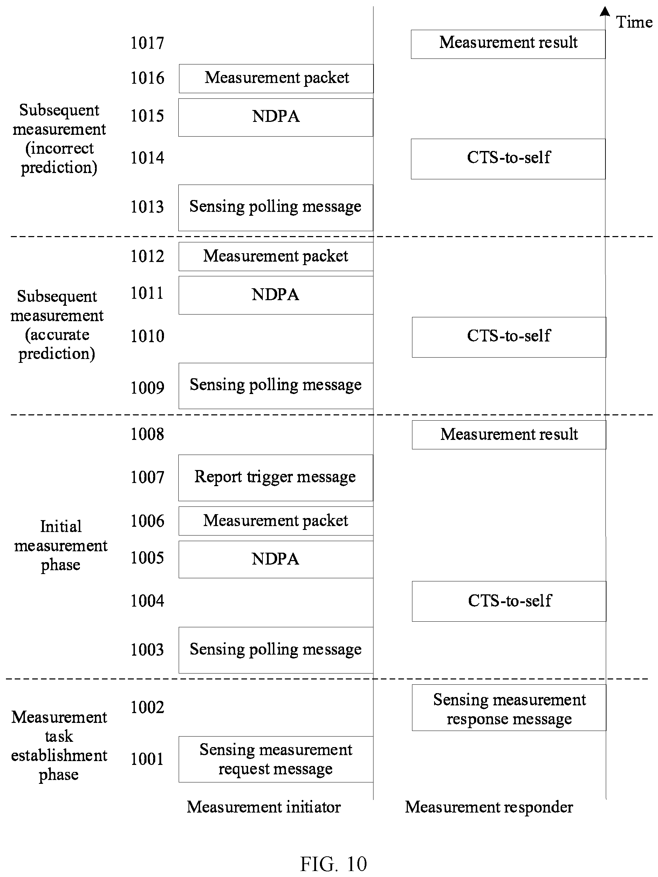

With reference to a measurement task establishment procedure, the following describes in detail the method shown in FIG. 6 with reference to FIG. 10.

FIG. 10 is a flowchart of a communication method according to an embodiment of this application. As shown in FIG. 10, the method includes the following steps.

Step 1001: In a measurement task establishment phase, a measurement initiator sends a sensing measurement request message to a measurement responder. Correspondingly, the measurement responder receives the sensing measurement request message from the measurement initiator.

The sensing measurement request is used to request the measurement responder to participate in a current measurement task. The sensing measurement request may include first information. For descriptions of the sensing measurement request, refer to the foregoing related descriptions. Details are not described again.

Step 1002: The measurement responder sends a sensing measurement response (Sensing Measurement Response) message to the measurement initiator. Correspondingly, the measurement initiator receives the sensing measurement response message from the measurement responder.

After receiving the sensing measurement request message from the measurement initiator, the measurement responder may record related parameters (information such as the first information, a physical channel parameter used for measurement, and a measurement frequency) required for the current measurement, and feed back the sensing measurement response message to the measurement initiator, indicating that the measurement responder determines to participate in the current measurement task. In this way, the measurement task is established.

It may be understood that, after the measurement task is established, the measurement initiator and the measurement responder may repeatedly perform measurement a plurality of times.

Step 1003: In an initial measurement phase, the measurement initiator sends a sensing polling (sensing polling) message to notify the measurement responder to prepare for channel measurement.

Step 1004: The measurement responder sends a CTS-to-self message to the measurement initiator, and determines that the measurement responder is ready for channel measurement.

Step 1005: The measurement initiator sends an NDPA message to notify the measurement responder to prepare for receiving the measurement packet and performing channel measurement.

Step 1006: The measurement initiator sends a measurement packet, and the measurement responder performs channel measurement based on the measurement packet to obtain a measurement result.

Because this measurement is initial measurement, and the measurement initiator has not obtained the channel information, the measurement initiator may directly send the measurement packet without performing precoding processing on the measurement packet.

Step 1007: The measurement initiator sends a report triggering message to the measurement responder, to notify the measurement responder to report the measurement result.

Step 1008: The measurement responder carries the measurement result in a measurement report message for reporting. In this case, the measurement initiator obtains basic information of a current channel, namely, a channel matrix on each subcarrier corresponding to the measurement responder.

In step 1003 to step 1007, the measurement initiator performs initial measurement to obtain the channel matrix. In this embodiment of this application, the measurement initiator plans to predict the channel matrix by using an algorithm like machine learning. Therefore, the measurement initiator may repeat step 1003 to step 1007 a plurality of times to obtain a plurality of historical channel matrices, for future channel information prediction. The measurement initiator may alternatively accumulate a plurality of historical channel matrices based on the measurement result fed back by the measurement responder when the prediction fails. For details, refer to the following step 1017.

Step 1009: The measurement initiator initiates subsequent measurement, and sends a sensing polling message, to notify the measurement responder to prepare for channel measurement.

Step 1010: The measurement responder sends a CTS-to-self message to the measurement initiator, and determines that the measurement responder is ready for channel measurement.

Step 1011: The measurement initiator sends an NDPA message to notify the measurement responder to prepare for receiving the measurement packet and performing channel measurement.

Step 1012: The measurement initiator sends a measurement packet, and the measurement responder performs channel measurement based on the measurement packet to obtain a measurement result, and compares the measurement result with a measurement result template to obtain a comparison result.

When sending the measurement packet, the measurement initiator may predict the channel matrix based on the historical channel matrix by using a machine learning algorithm or another prediction algorithm. Precoding processing is performed based on a predicted channel matrix, and it is expected that a measurement result obtained by the measurement responder through measurement on a given subcarrier set can be close to the measurement result template.

The measurement responder performs channel measurement based on the measurement packet. If a result of comparison between the measurement result and the measurement result template is less than a preset threshold, it indicates that the current channel prediction is correct, the measurement responder does not need to feed back the measurement result, and the current measurement ends. In addition, if the measurement initiator does not receive a feedback from the measurement responder within preset time, it may be determined that the current channel prediction is correct, and the predicted channel matrix may be determined as an actual channel matrix and recorded.

Step 1013: The measurement initiator initiates subsequent measurement again, and sends a sensing polling message, to notify the measurement responder to prepare for channel measurement.

Step 1014: The measurement responder sends a CTS-to-self message to the measurement initiator, and determines that the measurement responder is ready for channel measurement.

Step 1015: The measurement initiator sends an NDPA message to notify the measurement responder to prepare for receiving the measurement packet and performing channel measurement.

Step 1016: The measurement initiator sends a measurement packet, and the measurement responder performs channel measurement based on the measurement packet to obtain a measurement result, and compares the measurement result with a measurement result template to obtain a comparison result.

The measurement initiator may perform precoding processing based on the predicted channel matrix when sending the measurement packet, and it is expected that a measurement result obtained by the measurement responder through measurement on a given subcarrier set can be close to the measurement result template.

The measurement responder performs channel measurement based on the measurement packet. If a result of comparison between the measurement result and the measurement result template is greater than or equal to the preset threshold, it indicates that the channel changes, and there is a deviation between the predicted channel matrix and the actual channel matrix. The measurement responder may perform the following step 1017 to feed back the measurement result to the measurement initiator.

Step 1017: After finding that the comparison result is greater than or equal to the preset threshold, the measurement responder may separately apply for a transmission opportunity (for example, obtaining the transmission opportunity through channel contention), and send a measurement report message to the measurement initiator by using the transmission opportunity.

The measurement report message may include the measurement result. The measurement report message may further include identification information of the measurement task, to indicate a specific channel measurement process in which the measurement result is obtained.

The measurement initiator may determine, based on the received measurement result, that the channel prediction in step 1016 is incorrect, then deduce the actual channel matrix based on the measurement result, the predicted channel matrix, and the measurement result template, and record the actual channel matrix.

Optionally, the measurement initiator may further modify a prediction model parameter based on the difference between the predicted channel matrix and the actual channel matrix, to facilitate subsequent channel prediction.

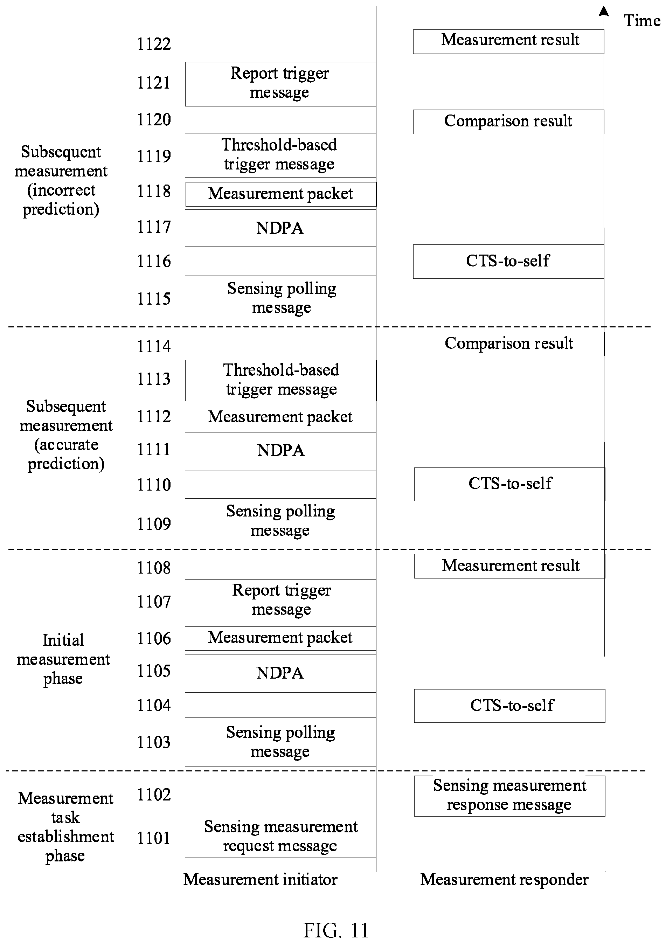

With reference to a measurement task establishment procedure, the following describes in detail the method shown in FIG. 7 with reference to FIG. 11.

Step 1101: In a measurement task establishment phase, a measurement initiator sends a sensing measurement request message to a measurement responder. Correspondingly, the measurement responder receives the sensing measurement request message from the measurement initiator.

Step 1102: The measurement responder sends a sensing measurement response message to the measurement initiator. Correspondingly, the measurement initiator receives the sensing measurement response message from the measurement responder.

Step 1103: In an initial measurement phase, the measurement initiator sends a sensing polling message to notify the measurement responder to prepare for channel measurement.

Step 1104: The measurement responder sends a CTS-to-self message to the measurement initiator, and determines that the measurement responder is ready for channel measurement.

Step 1105: The measurement initiator sends an NDPA message to notify the measurement responder to prepare for receiving the measurement packet and performing channel measurement.

Step 1106: The measurement initiator sends a measurement packet, and the measurement responder performs channel measurement based on the measurement packet to obtain a measurement result.

Step 1107: The measurement initiator sends a report triggering message to the measurement responder, to notify the measurement responder to report the measurement result.

Step 1108: The measurement responder carries the measurement result in a measurement report message for reporting. In this case, the measurement initiator obtains basic information of a current channel, namely, a channel matrix on each subcarrier corresponding to the measurement responder.

Step 1109: The measurement initiator initiates subsequent measurement, and sends a sensing polling message, to notify the measurement responder to prepare for channel measurement.

Step 1110: The measurement responder sends a CTS-to-self message to the measurement initiator, and determines that the measurement responder is ready for channel measurement.

Step 1111: The measurement initiator sends an NDPA message to notify the measurement responder to prepare for receiving the measurement packet and performing channel measurement.

Step 1112: The measurement initiator sends a measurement packet, and the measurement responder performs channel measurement based on the measurement packet to obtain a measurement result, and compares the measurement result with a measurement result template to obtain a comparison result.

The measurement initiator may perform precoding processing based on the predicted channel matrix when sending the measurement packet, and it is expected that a measurement result obtained by the measurement responder through measurement on a given subcarrier set can be close to the measurement result template.

For descriptions of step 1101 to step 1112, refer to the related descriptions of step 1001 to step 1012. Details are not described again.

Step 1113: The measurement initiator sends a threshold-based trigger (Threshold-based reporting trigger) message to the measurement responder, to notify the measurement responder to feed back the comparison result.

Step 1114: The measurement responder sends the comparison result to the measurement initiator.

The measurement responder may carry the comparison result in a measurement report (measurement report) message and send the measurement report message to the measurement initiator.

If the comparison result is less than a preset threshold, it may indicate that the current channel prediction is correct, and the measurement initiator does not need to trigger the measurement responder to report the measurement result, and may directly determine a predicted channel matrix as an actual channel matrix and record the actual channel matrix. The current measurement ends.

Step 1115: The measurement initiator initiates subsequent measurement again, and sends a sensing polling message, to notify the measurement responder to prepare for channel measurement.

Step 1116: The measurement responder sends a CTS-to-self message to the measurement initiator, and determines that the measurement responder is ready for channel measurement.

Step 1117: The measurement initiator sends an NDPA message to notify the measurement responder to prepare for receiving the measurement packet and performing channel measurement.

Step 1118: The measurement initiator sends a measurement packet, and the measurement responder performs channel measurement based on the measurement packet to obtain a measurement result, and compares the measurement result with a measurement result template to obtain a comparison result.

The measurement initiator may perform precoding processing based on the predicted channel matrix when sending the measurement packet, and it is expected that a measurement result obtained by the measurement responder through measurement on a given subcarrier set can be close to the measurement result template.

Step 1119: The measurement initiator sends a threshold-based trigger message to the measurement responder, to notify the measurement responder to feed back the comparison result.

Step 1120: The measurement responder sends the comparison result to the measurement initiator.

If the comparison result is greater than or equal to the preset threshold, it indicates that the channel changes, and there is a deviation between the predicted channel matrix and the actual channel matrix. The measurement initiator may perform the following step 1121 to trigger the measurement responder to feed back the measurement result.

Step 1121: The measurement initiator sends a report trigger (Report Trigger) message, to notify the measurement responder to feed back the measurement result.

Step 1122: The measurement responder feeds back the measured measurement result to the measurement initiator by using a measurement report message.

The measurement initiator may determine, based on the received measurement result, that the channel prediction in step 1118 is incorrect, then deduce the actual channel matrix based on the measurement result, the predicted channel matrix, and the measurement result template, and record the actual channel matrix.

Optionally, the measurement initiator may further modify a prediction model parameter based on the difference between the predicted channel matrix and the actual channel matrix, to facilitate subsequent channel prediction.

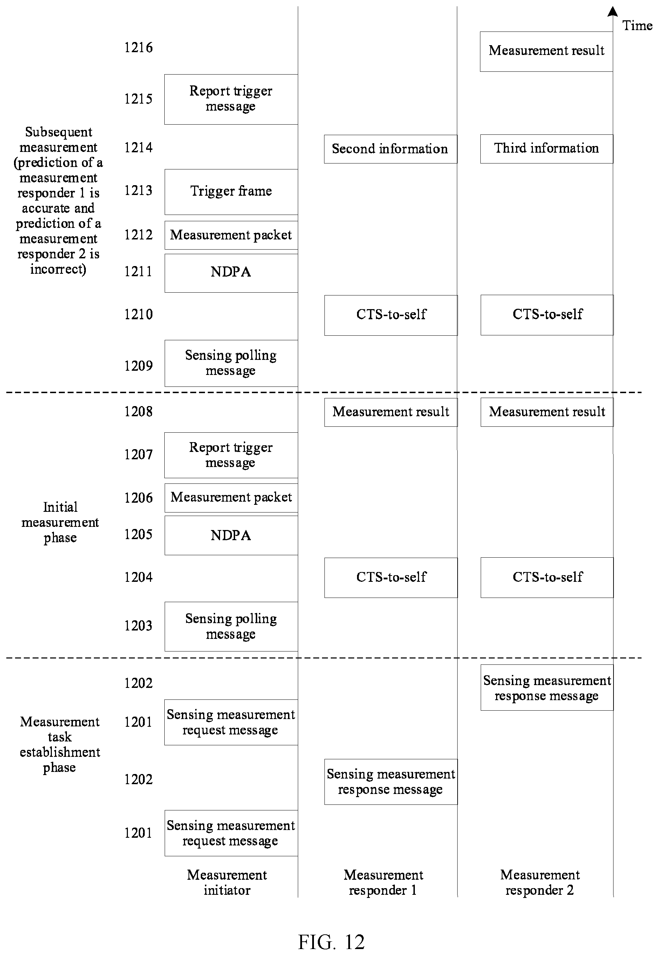

With reference to a measurement task establishment procedure, the following describes in detail the method shown in FIG. 8A and FIG. 8B with reference to FIG. 12.

Step 1201: In a measurement task establishment phase, a measurement initiator sends a sensing measurement request message to each of a measurement responder 1 and a measurement responder 2. Correspondingly, the measurement responder 1 and the measurement responder 2 each receive the sensing measurement request message from the measurement initiator.

The measurement initiator may establish a measurement task with each of the measurement responder 1 and the measurement responder 2, and when the measurement task is established, a plurality of different consecutive subcarriers used by each measurement responder to send uplink information is allocated to the measurement responder.

For example, the measurement initiator may allocate six subcarriers starting from a subcarrier 0 to the measurement responder 1 for uplink information feedback, and allocate six subcarriers starting from a subcarrier 128 to the measurement responder 2 for uplink information feedback.

Step 1202: The measurement responder 1 and the measurement responder 2 each send a sensing measurement response message to the measurement initiator. Correspondingly, the measurement initiator receives the sensing measurement response message from each of the measurement responder 1 and the measurement responder 2.

Step 1203: In an initial measurement phase, the measurement initiator sends a sensing polling message, to notify the measurement responder 1 and the measurement responder 2 to prepare for channel measurement.

Step 1204: The measurement responder 1 and the measurement responder 2 each send a CTS-to-self message to the measurement initiator, and determine that the measurement responder 1 and the measurement responder 2 are ready for channel measurement.

Step 1205: The measurement initiator sends an NDPA message, to notify the measurement responder 1 and the measurement responder 2 to prepare for receiving a measurement packet and performing channel measurement.

Step 1206: The measurement initiator sends the measurement packet, and the measurement responder 1 and the measurement responder 2 perform channel measurement based on the received measurement packet to obtain measurement results.

Because this measurement is initial measurement, and the measurement initiator has not obtained the channel information, the measurement initiator may directly send the measurement packet without performing precoding processing on the measurement packet.

Step 1207: The measurement initiator sends a report trigger message to the measurement responder 1 and the measurement responder 2, to notify the measurement responder 1 and the measurement responder 2 to report the measurement results.

Step 1208: The measurement responder 1 and the measurement responder 2 carry the measurement results in measurement report messages for reporting. In this case, the measurement initiator obtains basic information of a current channel, namely, a channel matrix on each subcarrier corresponding to the measurement responder 1 and a channel matrix on each subcarrier corresponding to the measurement responder 2.

Step 1209: The measurement initiator initiates subsequent measurement, and sends a sensing polling message, to notify the measurement responder 1 and the measurement responder 2 to prepare for channel measurement.

Step 1210: The measurement responder 1 and the measurement responder 2 each send a CTS-to-self message to the measurement initiator, and determine that the measurement responder 1 and the measurement responder 2 are ready for channel measurement.

Step 1211: The measurement initiator sends an NDPA message, to notify the measurement responder 1 and the measurement responder 2 to prepare for receiving a measurement packet and performing channel measurement.

Step 1212: The measurement initiator sends the measurement packet, and the measurement responder 1 and the measurement responder 2 each perform channel measurement based on the received measurement packet to obtain a measurement result, and compare the measurement result with a measurement result template to obtain a comparison result.

The measurement initiator may perform precoding processing based on a predicted channel matrix corresponding to the measurement responder when sending the measurement packet, and it is expected that a measurement result obtained by the measurement responder through measurement on a given subcarrier set can be close to a measurement result template corresponding to the measurement responder. For descriptions of step 1201 to step 1212, refer to the related descriptions of step 1001 to step 1012. Details are not described again.

Step 1213: The measurement initiator sends a trigger frame to the measurement responder 1 and the measurement responder 2, to trigger the measurement responder 1 and the measurement responder 2 to send uplink information.

Step 1214: The measurement responder 1 and the measurement responder 2 may send the uplink information to the measurement initiator simultaneously or in a time division multiplexing manner.

When determining that the comparison result is less than a preset threshold, the measurement responder 1 may send second information (namely, the uplink information) to the measurement initiator on a plurality of given consecutive subcarriers (for example, the six subcarriers starting from the subcarrier 0 in step 1201), to indicate that the comparison result is less than the preset threshold. The measurement initiator may determine, based on the received second information, that the comparison result is less than the preset threshold, that is, may determine that an actual channel matrix meets the prediction of the measurement initiator. In this case, the measurement initiator may not need to trigger the measurement responder to feed back the measurement result, but directly determine the predicted channel matrix as the actual channel matrix, and the current measurement ends.

Alternatively, when the measurement responder 2 determines that the comparison result is greater than or equal to the preset threshold, the measurement responder 2 may modulate a plurality of consecutive subcarriers (for example, the six subcarriers starting from the subcarrier 128 in step 1201) to obtain third information, and send the third information to the measurement initiator based on the plurality of consecutive subcarriers, to indicate that the comparison result is greater than or equal to the preset threshold. The measurement initiator may determine, based on the received third information, that the comparison result is greater than or equal to the preset threshold, that is, may determine that the actual channel matrix does not meet the prediction of the measurement initiator. In this case, the measurement initiator may trigger, by using the following step 1215, the measurement responder 2 to feed back the measurement result, to determine the actual channel matrix based on the received measurement result, thereby improving channel matrix accuracy.

Step 1215: The measurement initiator sends a report trigger message to the measurement responder 2, to trigger the measurement responder 2 to feed back the measurement result.

Step 1216: The measurement responder 2 feeds back the measured measurement result to the measurement initiator by using a measurement report message.

The measurement report message may further include identification information of the measurement task, to indicate a specific channel measurement process in which the measurement result is obtained.

The measurement initiator deduces the actual channel matrix corresponding to the measurement responder 2 based on the received measurement result, the predicted channel matrix, and the measurement result template, and records the actual channel matrix.

Optionally, the measurement initiator may further modify a prediction model parameter based on the difference between the predicted channel matrix and the actual channel matrix, to facilitate subsequent channel prediction.

Based on the embodiments shown in FIG. 5 to FIG. 12, optionally, when the measurement initiator allocates, to the measurement responder by using the second indication information, subcarriers used for channel measurement, different subcarriers used for channel measurement may be allocated to each measurement responder. In this way, the measurement responders cannot interfere with each other, and measurement monitoring of a plurality of links is performed simultaneously by using a single measurement packet, thereby implementing simultaneous channel monitoring on a plurality of measurement responders.

Specifically, based on a feature that spaced subcarriers may be used for monitoring during radio channel measurement, it is allowed to allocate a plurality of subcarriers across an entire bandwidth to each measurement responder. In other words, the measurement initiator may allocate a plurality of subcarriers corresponding to the measurement packet to different measurement responders, and the different measurement responders are independent of each other. Because precoding processing may be separately performed on the subcarriers, the measurement initiator may perform precoding processing on the subcarriers corresponding to each measurement responder based on the predicted channel matrix corresponding to each measurement responder and the measurement result template. In other words, a single measurement packet may support simultaneous precoding processing on a plurality of links, to achieve the objective of simultaneous channel monitoring on links of a plurality of measurement responders in single measurement, thereby achieving good monitoring effect.

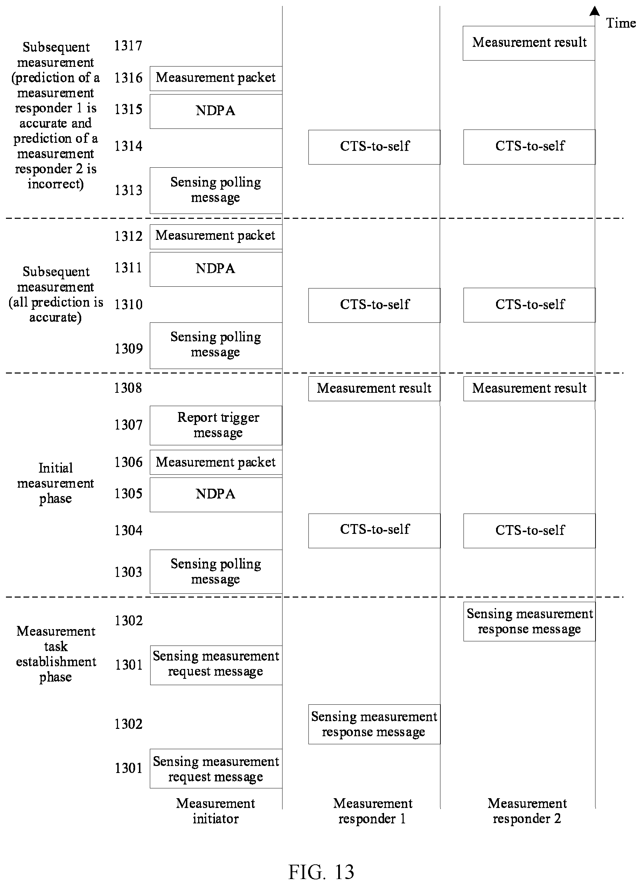

For example, with reference to the measurement task establishment procedure, as shown in FIG. 13, the communication method based on the subcarrier allocation principle is described in detail.

FIG. 13 is a diagram of a communication method according to an embodiment of this application. As shown in FIG. 13, the method includes the following steps.

Step 1301: In a measurement task establishment phase, a measurement initiator sends a sensing measurement request message to each of a measurement responder 1 and a measurement responder 2. Correspondingly, the measurement responder 1 and the measurement responder 2 each receive the sensing measurement request message from the measurement initiator.

The measurement initiator may establish a measurement task with each of the measurement responder 1 and the measurement responder 2, and when the measurement task is established, different subcarriers used for channel measurement are allocated to each measurement responder.

For example, the measurement initiator may allocate a subcarrier set (for example, subcarriers 0, 8, 16, and 24) with an interval of eight subcarriers and starting from the subcarrier 0 to the measurement responder 1 to perform channel measurement, and allocate a subcarrier set (for example, subcarriers 4, 12, 20, and 28) with an interval of eight subcarriers and starting from the subcarrier 4 to the measurement responder 2. In this case, subcarrier sets monitored by the two measurement responders do not overlap.

Step 1302: The measurement responder 1 and the measurement responder 2 each send a sensing measurement response message to the measurement initiator. Correspondingly, the measurement initiator receives the sensing measurement response message from each of the measurement responder 1 and the measurement responder 2.

Step 1303: In an initial measurement phase, the measurement initiator sends a sensing polling message, to notify the measurement responder 1 and the measurement responder 2 to prepare for channel measurement.

Step 1304: The measurement responder 1 and the measurement responder 2 each send a CTS-to-self message to the measurement initiator, and determine that the measurement responder 1 and the measurement responder 2 are ready for channel measurement.

Step 1305: The measurement initiator sends an NDPA message, to notify the measurement responder 1 and the measurement responder 2 to prepare for receiving a measurement packet and performing channel measurement.

Step 1306: The measurement initiator sends the measurement packet, and the measurement responder 1 and the measurement responder 2 perform channel measurement based on the received measurement packet to obtain measurement results.

Because this measurement is initial measurement, and the measurement initiator has not obtained the channel information, the measurement initiator may directly send the measurement packet without performing precoding processing on the measurement packet.

Step 1307: The measurement initiator sends a report trigger message to the measurement responder 1 and the measurement responder 2, to notify the measurement responder 1 and the measurement responder 2 to report the measurement results.

Step 1308: The measurement responder 1 and the measurement responder 2 carry the measurement results in measurement report messages for reporting. In this case, the measurement initiator obtains basic information of a current channel, namely, a channel matrix on each subcarrier corresponding to the measurement responder 1 and a channel matrix on each subcarrier corresponding to the measurement responder 2.

Step 1309: The measurement initiator initiates subsequent measurement, and sends a sensing polling message, to notify the measurement responder 1 and the measurement responder 2 to prepare for channel measurement.

Step 1310: The measurement responder 1 and the measurement responder 2 each send a CTS-to-self message to the measurement initiator, and determine that the measurement responder 1 and the measurement responder 2 are ready for channel measurement.

Step 1311: The measurement initiator sends an NDPA message, to notify the measurement responder 1 and the measurement responder 2 to prepare for receiving a measurement packet and performing channel measurement.

Step 1312: The measurement initiator sends the measurement packet, and the measurement responder 1 and the measurement responder 2 each perform channel measurement based on the received measurement packet to obtain a measurement result, and compare the measurement result with a measurement result template to obtain a comparison result.

The measurement initiator may perform precoding processing based on a predicted channel matrix corresponding to the measurement responder when sending the measurement packet, and it is expected that a measurement result obtained by the measurement responder through measurement on a given subcarrier set can be close to a measurement result template corresponding to the measurement responder. For descriptions of step 1301 to step 1312, refer to the related descriptions of step 1001 to step 1012. Details are not described again.

The measurement initiator uses a historical channel matrix of the measurement responder 1 to perform channel prediction on a subcarrier set used by the measurement responder 1 for channel measurement, and then performs precoding processing; and uses a historical channel matrix of the measurement responder 2 to perform channel prediction on a subcarrier set used by the measurement responder 2 for channel measurement, and then performs precoding processing. The measurement responder 1 performs measurement based on the received measurement packet, and only compares whether the measurement result on the subcarrier set corresponding to the measurement responder 1 meets the measurement result template. Similarly, the measurement responder 2 only compares whether the measurement result on the subcarrier set corresponding to the measurement responder 2 meets the measurement result template. For descriptions of step 1301 to step 1312, refer to the related descriptions of step 1001 to step 1012. Details are not described again.

After obtaining respective corresponding comparison results, the measurement responder 1 and the measurement responder 2 may perform channel measurement feedback with reference to the method shown in step 1012 to step 1017 in FIG. 10, or may perform channel measurement feedback with reference to the method shown in step 1112 to step 1122 in FIG. 11, or may perform channel measurement feedback with reference to the method shown in step 1212 to step 1216 in FIG. 12. This is not limited.

The following provides descriptions by using an example in which the measurement responder 1 and the measurement responder 2 perform channel measurement feedback with reference to the method shown in the steps in FIG. 10.

If a result of comparison between the measurement result and the measurement result template is less than the preset threshold, it indicates that the current channel prediction is correct, the measurement responder does not need to feed back the measurement result, and the current measurement ends. In addition, if the measurement initiator does not receive a feedback from the measurement responder within preset time, it may be determined that the current channel prediction is correct, and the predicted channel matrix may be determined as an actual channel matrix and recorded.

Step 1313: The measurement initiator initiates subsequent measurement again, and sends a sensing polling message, to notify the measurement responder 1 and the measurement responder 2 to prepare for channel measurement.

Step 1314: The measurement responder 1 and the measurement responder 2 each send a CTS-to-self message to the measurement initiator, and determine that the measurement responder 1 and the measurement responder 2 are ready for channel measurement.

Step 1315: The measurement initiator sends an NDPA message, to notify the measurement responder 1 and the measurement responder 2 to prepare for receiving a measurement packet and performing channel measurement.

Step 1316: The measurement initiator sends a measurement packet, and the measurement responder 1 and the measurement responder 2 perform channel measurement based on the measurement packet to obtain measurement results, and compare the measurement results with the measurement result template to obtain comparison results.

The measurement initiator may perform precoding processing based on a predicted channel matrix corresponding to the measurement responder when sending the measurement packet, and it is expected that a measurement result obtained by the measurement responder through measurement on a given subcarrier set can be close to a measurement result template corresponding to the measurement responder.

The measurement responder 1 and the measurement responder 2 perform channel measurement based on the received measurement packet. If the measurement responder 1 determines that the result of comparison between the measurement result and the measurement result template is less than the preset threshold, it indicates that the current channel prediction is correct, the measurement responder does not need to feed back the measurement result, and the current measurement ends. In addition, if the measurement initiator does not receive a feedback from the measurement responder 1 within preset time, it may be determined that the current channel prediction is correct, and the predicted channel matrix of the measurement responder 1 may be determined as an actual channel matrix and recorded.

If the measurement responder 2 determines that the result of comparison between the measurement result and the measurement result template is greater than or equal to the preset threshold, it indicates that the channel changes, and there is a deviation between the predicted channel matrix and the actual channel matrix. The measurement responder 2 may perform the following step 1317 to feed back the measurement result to the measurement initiator.

Step 1317: After finding that the comparison result is greater than or equal to the preset threshold, the measurement responder 2 may separately apply for a transmission opportunity (for example, obtaining the transmission opportunity through channel contention), and send a measurement report message to the measurement initiator by using the transmission opportunity.

The measurement report message may include the measurement result. The measurement report message may further include identification information of the measurement task, to indicate a specific channel measurement process in which the measurement result is obtained.

The measurement initiator may determine, based on the received measurement result, that the channel prediction of the measurement responder 2 in step 1316 is incorrect, then deduce the actual channel matrix of the measurement responder 2 based on the measurement result, the predicted channel matrix, and the measurement result template, and record the actual channel matrix.

Optionally, the measurement initiator may further modify a prediction model parameter based on the difference between the predicted channel matrix and the actual channel matrix, to facilitate subsequent channel prediction.

It should be noted that various embodiments of this application may be implemented separately, or may be implemented in combination. This is not limited. Unless otherwise stated or there is a logic conflict, terms and/or descriptions in different embodiments provided in this application are consistent and may be mutually referenced, and technical features in different embodiments may be combined based on an internal logical relationship thereof, to form a new embodiment.

It may be understood that in embodiments of this application, an execution body may perform some or all of the steps in embodiments of this application. The steps or operations are merely examples. Other operations or variations of various operations may be further performed in embodiments of this application. In addition, the steps may be performed in a sequence different from a sequence presented in embodiments of this application, and not all the operations in embodiments of this application may be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, each device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that the division of the modules in embodiments of this application is an example, and is merely logical functional division, and other division may be used in an actual implementation.

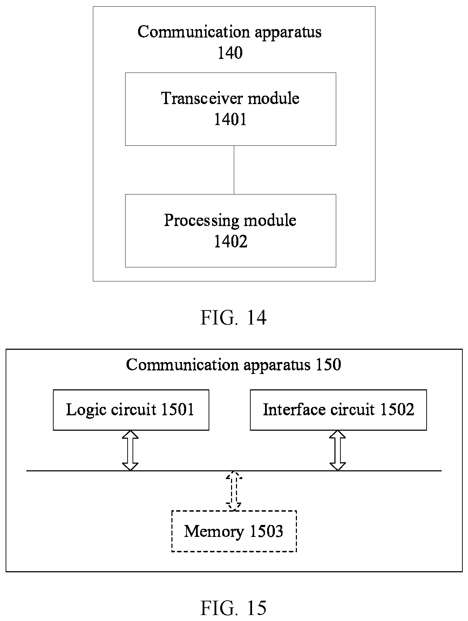

When each functional module is obtained through division based on each corresponding function, FIG. 14 shows a communication apparatus 140. The communication apparatus 140 may perform actions performed by the measurement initiator in the method shown in FIG. 5 to FIG. 13, or perform actions performed by the measurement responder in the method shown in FIG. 5 to FIG. 13. All related content of steps in the foregoing method embodiments may be referenced to function descriptions of corresponding functional modules. For technical effects that can be achieved by the apparatus, refer to the foregoing method embodiments. Details are not described herein again.

The communication apparatus 140 may include a transceiver module 1401 and a processing module 1402. For example, the communication apparatus 140 may be a communication device, or may be a chip used in the communication device, or another combined device or component that has a function of the communication apparatus. When the communication apparatus 140 is a communication device, the transceiver module 1401 may be a transceiver. The transceiver may include an antenna, a radio frequency circuit, and the like. The processing module 1402 may be a processor (or a processing circuit), for example, a baseband processor. The baseband processor may include one or more CPUs. When the communication apparatus 140 is a component that has a function of the communication apparatus, the transceiver module 1401 may be a radio frequency unit; and the processing module 1402 may be a processor (or a processing circuit), for example, a baseband processor. When the communication apparatus 140 is a chip system, the transceiver module 1401 may be an input/output interface of a chip (for example, a baseband chip), and the processing module 1402 may be a processor (or a processing circuit) of the chip system, and may include one or more central processing units. It should be understood that the transceiver module 1401 in this embodiment of this application may be implemented by a transceiver or a transceiver-related circuit component, and the processing module 1402 may be implemented by a processor or a processor-related circuit component (or referred to as a processing circuit).

For example, the transceiver module 1401 may be configured to perform all sending and receiving operations performed by the communication apparatus in the embodiments shown in FIG. 5 to FIG. 13, and/or configured to support another process of the technology described in this specification. The processing module 1402 may be configured to perform all operations except the sending and receiving operations performed by the communication apparatus in the embodiments shown in FIG. 5 to FIG. 13, and/or configured to support another process of the technology described in this specification.

In another implementation, the transceiver module 1401 in FIG. 14 may be replaced with a transceiver, where a function of the transceiver module 1401 may be integrated into the transceiver; and the processing module 1402 may be replaced with a processor, where a function of the processing module 1402 may be integrated into the processor. Further, the communication apparatus 140 shown in FIG. 14 may further include a memory.

Alternatively, when the processing module 1402 is replaced with a processor, and the transceiver module 1401 is replaced with a transceiver, the communication apparatus 140 in this embodiment of this application may alternatively be a communication apparatus 150 shown in FIG. 15. The processor may be a logic circuit 1501, and the transceiver may be an interface circuit 1502. Further, the communication apparatus 150 shown in FIG. 15 may further include a memory 1503.

Optionally, the communication method provided in this application may alternatively be implemented by a hardware chip, or may be implemented through firmware refresh or system software. This is not limited.

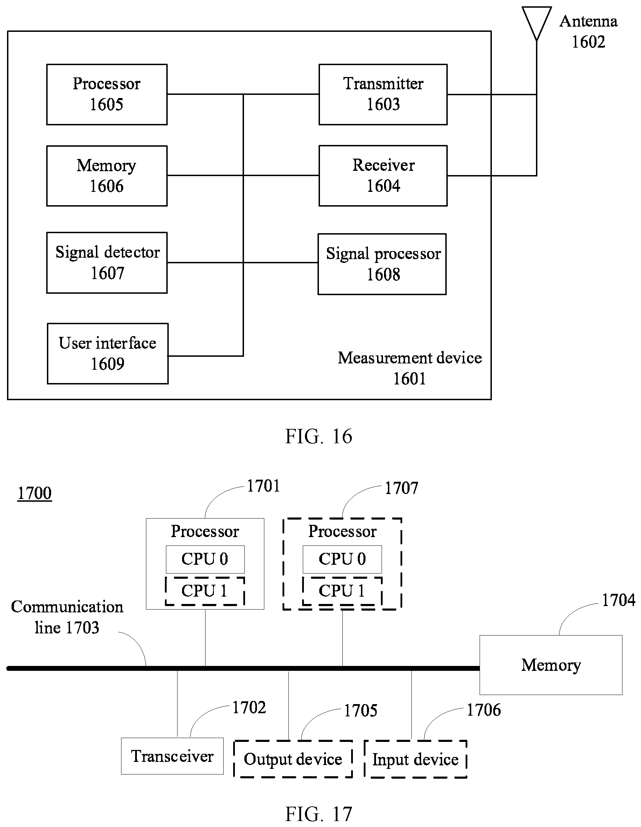

For example, FIG. 16 is a diagram of a structure of a measurement device 1601. The measurement device 1601 may be a measurement initiator, or may be a measurement responder. The measurement device 1601 may include an antenna 1602, a transmitter 1603, a receiver 1604, a processor 1605, a memory 1606, a signal detector 1607, a signal processor 1608, and a user interface 1609.

The antenna 1602 is configured to obtain a radio signal from the air or send a radio signal to a channel, where the radio signal may include a protocol interaction packet and a measurement packet. The measurement device may be equipped with one or more antennas. The transmitter 1603 is mainly responsible for modulating the radio signal and then sending a modulated radio signal to the antenna 1602, and may also perform fine control on a transmit power. The receiver 1604 is mainly responsible for demodulating the radio signal to form a digital signal. The processor 1605 is mainly responsible for processing a protocol packet, performing interaction, and the like. The memory 1606 is mainly responsible for storing a packet, a measurement result, received and sent data sequences, and the like. The signal detector 1607 is mainly configured to perform detection, synchronization, and the like on the received radio signal. The signal processor 1608 is mainly configured to: process a digital sequence of a received signal, perform time domain and frequency domain conversion, perform signal correlation processing, obtain measurement data estimation, and the like. The user interface 1609 is configured to interact with a user or transfer information by using a number, a text, or a graphical interface.

During specific implementation, for example, each measurement initiator and each measurement responder may alternatively use a composition structure shown in FIG. 17, or include components shown in FIG. 17. FIG. 17 is a diagram of composition of a communication apparatus 1700 according to an embodiment of this application. The communication apparatus 1700 may be a measurement initiator or a chip or a system on chip in a measurement initiator, or may be a measurement responder, or a chip or a system on chip in a measurement responder. As shown in FIG. 17, the communication apparatus 1700 includes a processor 1701, a transceiver 1702, and a communication line 1703.

Further, the communication apparatus 1700 may further include a memory 1704. The processor 1701, the memory 1704, and the transceiver 1702 may be connected through the communication line 1703.

The processor 1701 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1701 may be another apparatus having a processing function, for example, a circuit, a component, or a software module. This is not limited.

The transceiver 1702 is configured to communicate with another device or another communication network. The another communication network may be the Ethernet, a radio access network (radio access network, RAN), or the like. The transceiver 1702 may be a module, a circuit, a transceiver, or any apparatus that can implement communication.

The communication line 1703 is configured to transmit information between components included in the communication apparatus 1700.

The memory 1704 is configured to store instructions. The instructions may be a computer program.

The memory 1704 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that, the memory 1704 may exist independently of the processor 1701, or may be integrated with the processor 1701. The memory 1704 may be configured to store instructions, program code, some data, or the like. The memory 1704 may be located inside the communication apparatus 1700, or may be located outside the communication apparatus 1700. This is not limited. The processor 1701 is configured to execute the instructions stored in the memory 1704, to implement the communication method provided in the following embodiments of this application.

In an example, the processor 1701 may include one or more CPUs, for example, a CPU 0 and a CPU 1 in FIG. 17.

In an optional implementation, the communication apparatus 1700 includes a plurality of processors. For example, in addition to the processor 1701 in FIG. 17, a processor 1707 may be further included.

In an optional implementation, the communication apparatus 1700 further includes an output device 1705 and an input device 1706. For example, the input device 1706 is a device like a keyboard, a mouse, a microphone, or a joystick, and the output device 1705 is a device like a display or a speaker (speaker).

It should be noted that the communication apparatus 1700 may be a desktop computer, a portable computer, a network server, a mobile phone, a tablet computer, a wireless terminal, an embedded device, a chip system, or a device having a structure similar to that in FIG. 17. In addition, the composition structure shown in FIG. 17 does not constitute a limitation on the communication apparatus. In addition to the components shown in FIG. 17, the communication apparatus may include more or fewer components than those shown in the figure, or some components may be combined, or different component arrangements may be used.

In embodiments of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or some of procedures in the foregoing method embodiments may be implemented by a computer program instructing related hardware. The program may be stored in the computer-readable storage medium. When the program is executed, the procedures in the foregoing method embodiments may be performed. The computer-readable storage medium may be an internal storage unit in the terminal (including a data transmit end and/or a data receive end) in any one of the foregoing embodiments, for example, a hard disk or memory of the terminal. The computer-readable storage medium may alternatively be an external storage device of the terminal, for example, a plug-in hard disk, a smart memory card (smart memory card, SMC), a secure digital (secure digital, SD) card, and a flash card (flash card) that are configured on the terminal. Further, the computer-readable storage medium may further include both an internal storage unit and an external storage device of the terminal. The computer-readable storage medium is configured to store the computer program and other programs and data required by the terminal. The computer-readable storage medium may be further configured to temporarily store data that has been output or is to be output.

It should be noted that, in the specification, claims, and accompanying drawings of this application, the terms "first", "second", and the like are intended to distinguish between different objects but do not indicate a particular sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more of features. In the descriptions of embodiments, unless otherwise specified, "a plurality of' means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" means one or more. "A plurality of' means two or more than two. "At least two (items) "means two, three, or more than three. "And/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate a, b, c, "a and b", "a and c", "b and c", or "a, b, and c", where a, b, and c may be singular or plural. Both "when ..." and "if' mean that corresponding processing is performed in an objective case, are not intended to limit time, do not require a determining action during implementation, and do not mean that there is another limitation.

In embodiments of this application, words such as "example" or "for example" is used to give an example, an illustration, or a description. Any embodiment or design solution described as "example" or "for example" in embodiments of this application should not be explained as being more preferred or having more advantages than another embodiment or design solution. Exactly, use of the terms such as "example" or "for example" is intended to present a related concept in a specific manner for ease of understanding.

In this application, "sending information to ... (a terminal device)" may be understood as that a destination of the information is the terminal device, and may include directly or indirectly sending the information to the terminal device. "Receiving information from... (the terminal device)" may be understood as that a source end of the information is the terminal device, and may include directly or indirectly receiving the information from the terminal device. Necessary processing like a format change may be performed on the information between the source end and the destination end for information sending. However, the destination end can understand valid information from the source end.

Based on descriptions of the foregoing implementations, a person skilled in the art may be clearly understood that, for convenience and ease of description, the division of the functional modules is merely used as an example for description. During actual application, the functions may be allocated to different functional modules for implementation according to requirements, that is, an internal structure of the apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may be one physical unit or a plurality of physical units, may be located in one position, or may be distributed to a plurality of different positions. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a readable storage medium. Based on such understanding, the technical solutions of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A communication method, comprising:
receiving first information from a measurement initiator, wherein the first information comprises first indication information, and the first indication information indicates a measurement result template;
receiving a measurement packet from the measurement initiator, wherein the measurement packet is determined based on a predicted channel matrix and the measurement result template, and the predicted channel matrix is determined based on a historical channel matrix;
performing channel measurement based on the measurement packet to obtain a measurement result; and
performing feedback based on a comparison result, wherein the comparison result is a result of comparison between the measurement result and the measurement result template.

2. The method according to claim 1, wherein
the first information further comprises second indication information, wherein the second indication information indicates N subcarriers on which a measurement responder performs channel measurement, and N is a positive integer.

3. The method according to claim 2, wherein
performing channel measurement on the N subcarriers based on the measurement packet, to obtain N measurement results corresponding to the N subcarriers;
separately comparing the N measurement results with the measurement result template to obtain N first results; and
determining the comparison result based on the N first results.

4. The method according to claim 3, wherein
the first information further comprises third indication information; the third indication information indicates a type of the comparison result; and the type of the comparison result is any one of the following: an average value of amplitude differences of the N first results, a maximum value of the amplitude differences of the N first results, average values of amplitude deviations and phase deviations of the N first results, and maximum values of the amplitude deviations and the phase deviations of the N first results.

5. The method according to any one of claims 1 to 4, wherein
the first information further comprises one or more of the following: fourth indication information and fifth indication information;
the fourth indication information indicates a measurement mode; the measurement mode is any one of the following: a first measurement mode, a second measurement mode, and a third measurement mode; the first measurement mode indicates the measurement responder to feed back the comparison result; the second measurement mode indicates the measurement responder to feed back the measurement result when the comparison result is greater than or equal to a preset threshold; and the third measurement mode indicates the measurement responder to indicate, by using uplink information, whether the comparison result is greater than or equal to the preset threshold; and
the fifth indication information indicates the preset threshold.

6. The method according to any one of claims 1 to 5, wherein performing feedback based on the comparison result comprises:
sending the comparison result to the measurement initiator.

7. The method according to any one of claims 1 to 5, wherein performing feedback based on the comparison result comprises:
when the comparison result is greater than or equal to the preset threshold, sending the measurement result to the measurement initiator; or
when the comparison result is less than the preset threshold, skipping feeding back the measurement result.

8. The method according to any one of claims 1 to 5, wherein the first information further comprises sixth indication information, the sixth indication information indicates a plurality of consecutive subcarriers used by the measurement responder to send the uplink information, and performing feedback based on the comparison result comprises:
when the comparison result is less than the preset threshold, sending second information to the measurement initiator based on the plurality of consecutive subcarriers, wherein the second information indicates that the comparison result is less than the preset threshold; or
when the comparison result is greater than or equal to the preset threshold, modulating the plurality of consecutive subcarriers to obtain third information, and sending the third information to the measurement initiator based on the plurality of consecutive subcarriers, wherein the third information indicates that the comparison result is greater than or equal to the preset threshold.

9. A communication method, comprising:
sending first information to a measurement responder, wherein the first information comprises first indication information, and the first indication information indicates a measurement result template; and
sending a measurement packet to the measurement responder, wherein the measurement packet is determined based on a predicted channel matrix and the measurement result template, and the predicted channel matrix is determined based on a historical channel matrix.

10. The method according to claim 9, wherein
the first information further comprises second indication information, wherein the second indication information indicates N subcarriers on which the measurement responder performs channel measurement, and N is a positive integer.

11. The method according to claim 10, wherein
the first information further comprises third indication information; the third indication information indicates a type of a comparison result; the type of the comparison result is any one of the following: an average value of amplitude differences of N first results, a maximum value of the amplitude differences of the N first results, average values of amplitude deviations and phase deviations of the N first results, and maximum values of the amplitude deviations and the phase deviations of the N first results; and the N first results are determined based on N measurement results corresponding to the N subcarriers and the measurement result template.

12. The method according to any one of claims 9 to 11, wherein
the first information further comprises one or more of the following: fourth indication information and fifth indication information;
the fourth indication information indicates a measurement mode; the measurement mode is any one of the following: a first measurement mode, a second measurement mode, and a third measurement mode; the first measurement mode indicates the measurement responder to feed back the comparison result; the second measurement mode indicates the measurement responder to feed back the measurement result when the comparison result is greater than or equal to a preset threshold; and the third measurement mode indicates the measurement responder to indicate, by using uplink information, whether the comparison result is greater than or equal to the preset threshold; and
the fifth indication information indicates the preset threshold.

13. The method according to any one of claims 9 to 12, wherein the method further comprises:
receiving the comparison result from the measurement responder, wherein the comparison result is a result of comparison between the measurement result and the measurement result template, and the measurement result is determined based on the measurement packet.

14. The method according to claim 13, wherein
when the comparison result is greater than or equal to the preset threshold, sending seventh indication information to the measurement responder, wherein the seventh indication information indicates to report the measurement result; and
receiving the measurement result from the measurement responder.

15. The method according to claim 14, wherein the method further comprises:
determining, based on the measurement result, the measurement result template, and the predicted channel matrix, an actual channel matrix corresponding to the measurement result.

16. The method according to claim 13, wherein the method further comprises:
when the comparison result is less than the preset threshold, determining the predicted channel matrix as an actual channel matrix.

17. The method according to any one of claims 9 to 12, wherein the method further comprises:
determining the predicted channel matrix as an actual channel matrix when no measurement result from the measurement responder is received within preset time.

18. The method according to any one of claims 9 to 12, wherein the first information further comprises sixth indication information, the sixth indication information indicates a plurality of consecutive subcarriers used by the measurement responder to send the uplink information, and the method further comprises:
receiving second information from the measurement responder, wherein the second information is uplink information, the second information indicates that the comparison result is less than the preset threshold, the comparison result is a result of comparison between the measurement result and the measurement result template, and the measurement result is determined based on the measurement packet; or
receiving third information from the measurement responder, wherein the third information is modulated uplink information, the third information indicates that the comparison result is greater than or equal to the preset threshold, the comparison result is a result of comparison between the measurement result and the measurement result template, and the measurement result is determined based on the measurement packet.

19. The method according to claim 18, wherein the method further comprises:
determining the predicted channel matrix as an actual channel matrix when the second information from the measurement responder is received.

20. The method according to claim 18, wherein the method further comprises:
when the third information from the measurement responder is received, sending seventh indication information to the measurement responder, wherein the seventh indication information indicates to report the measurement result; and
receiving the measurement result from the measurement responder.

21. The method according to claim 20, wherein the method further comprises:
determining, based on the measurement result, the measurement result template, and the predicted channel matrix, an actual channel matrix corresponding to the measurement result.

22. A communication apparatus, comprising a unit or a module configured to perform the communication method according to any one of claims 1 to 8, or comprising a unit or a module configured to perform the communication method according to any one of claims 9 to 21.

23. A communication apparatus, wherein the communication apparatus comprises a processor, and the processor is configured to run a computer program or instructions, so that the communication method according to any one of claims 1 to 8 is performed, or the communication method according to any one of claims 9 to 21 is performed.

24. The communication apparatus according to claim 23, wherein
the communication apparatus further comprises a memory, and the memory is configured to store the computer program or the instructions.

25. A communication apparatus, wherein the communication apparatus comprises an interface circuit and a logic circuit; the interface circuit is configured to input and/or output information; and the logic circuit is configured to: perform the communication method according to any one of claims 1 to 8, or perform the communication method according to any one of claims 9 to 21, and perform processing based on the information and/or generate the information.

26. A computer-readable storage medium, wherein the computer-readable storage medium stores computer instructions or a program, and when the computer instructions or the program is run on a computer, the communication method according to any one of claims 1 to 8 is performed, or the communication method according to any one of claims 9 to 21 is performed.

27. A computer program product, wherein the computer program product comprises computer instructions, and when a part or all of the computer instructions are run on a computer, the communication method according to any one of claims 1 to 8 is performed, or the communication method according to any one of claims 9 to 21 is performed.
